(19) Europäisches Patentamt
European Patent Office
Office européen des brevets

(11) EP 2 366 453 A2

(12) # EUROPEAN PATENT APPLICATION

(43) Date of publication:
**21.09.2011 Bulletin 2011/38**

(21) Application number: **11154609.9**

(22) Date of filing: **16.02.2011**

(51) Int Cl.:
***B01L 9/00*** *(2006.01)* ***B01L 3/00*** *(2006.01)*
***B29C 65/00*** *(2006.01)* ***G01N 21/03*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.03.2010 JP 2010061254**

(71) Applicant: **Omron Corporation**
**Kyoto-shi, Kyoto 600-8530 (JP)**

(72) Inventors:
- **Hasui, Ryosuke**
  **Kyoto-shi, Kyoto 600-8530 (JP)**
- **Iwasaka, Hiroyuki**
  **Kyoto-shi, Kyoto 600-8530 (JP)**
- **Nishikawa, Takeo**
  **Kyoto-shi, Kyoto 600-8530 (JP)**
- **Yamada, Keisuke**
  **Kyoto-shi, Kyoto 600-8530 (JP)**
- **Kamiyama, Susumu**
  **Kyoto-shi, Kyoto 600-8530 (JP)**

(74) Representative: **Giovannini, Francesca et al**
**Osha Liang**
**32, avenue de l'Opéra**
**75002 Paris (FR)**

(54) **Channel chip and jig**

(57) A channel chip (1) comprises a substrate (2) made of a material capable of transmitting light, the substrate (2) comprising a groove (21) to form a channel (11) for allowing a fluid to flow; and a film (3) made of a material capable of transmitting light, the film (3) being bonded to the substrate (2) with a pressure sensitive adhesive agent to seal the groove (21).

FIG. 2A

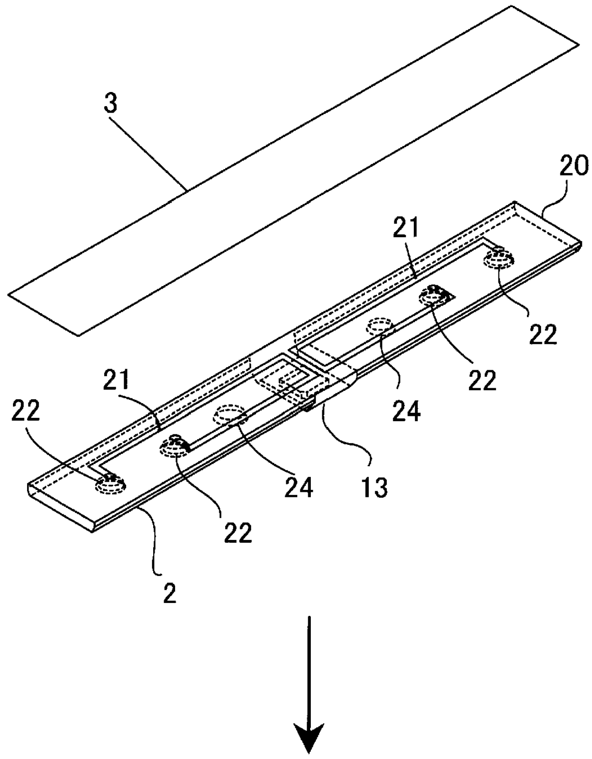


EP 2 366 453 A2

## Description

### BACKGROUND OF THE INVENTION

Field of the invention

The present invention generally relates to a channel chip and, more particularly, to a microchannel chip comprising at least one microchannel, as well as to a jig for holding the channel chip.

Description of the Related Art

Microchannel chips are known as chemical analysis chips that are manufactured by using a microelectromechanical system or the like. Various kinds of functions can be integrated on one chip, and specimen materials can be detected with high precision. Accordingly, microchannel chips are used in a wide variety of fields, such as medical industries, environmental industries, food industries, and micro chemical synthesis (Japanese Patent Application Laid-Open Nos. 2008-76208 and 2008-175795, for example). As reaction detecting methods using microchannel chips, known methods are a method that utilizes fluorescent molecules, an absorbance measurement method, an electrochemical measurement method, a surface plasmon resonance method, and the like. It is also known a method by which only the fluid processing such as mixing or separating may be performed on a microchannel chip, and sensing operations may be performed outside the chip.

A microchannel chip uses very small channels each having a depth of several tens of micrometers ($\mu$m) and a width of several tens to several hundreds of micrometers. Such a microchannel chip performs fluid processing such as mixing and separating, and detects a reaction or the like of a fluid in the channels. A microchannel chip having such microchannels has the following advantages. For example, a diffusion reaction time is proportional to the square of the diffusion length. Therefore, each reaction time can be shortened by narrowing the space formed by the microchannels. Also, the interfacial area relative to a unit volume (the relative interfacial area) becomes larger, and the proportion of the area can be made larger when different fluids are brought into contact with each other in the channels. Accordingly, a high diffusion effect can be achieved. Also, as the heat capacity is small, rapid heating and cooling can be performed.

Figs. 29 and 30 illustrate the structure of a microchannel chip according to a conventional technique. Fig. 29 is a schematic perspective view of the microchannel chip according to the conventional technique. Fig. 30 is a schematic cross-sectional view of the microchannel chip according to the conventional technique. As shown in the drawings, the conventional microchannel chip 100 includes a substrate 101 in which a groove for forming a channel is formed, and a substrate 102 that serves as a cover. The substrate 102 is bonded to the groove formation face of the substrate 101, to seal the groove and form a channel 103 for feeding fluids.

As a method of sealing a channel, a thermal compression bonding method is normally adopted. By a thermal compression bonding method, the joining faces are dissolved by applying pressure and heat for a certain period of time, and the joining faces are then bonded to each other. Other than that, it is known a method by which thermoplastic resin is used as a substrate, and instant melting and bonding are performed by ultrasonic vibrations and application of pressure (Japanese Patent Application Laid-Open No. 2008-216121). It is also known a method by which ultraviolet curable resin is applied to the joining faces, and bonding is performed through ultraviolet irradiation (Japanese Patent Application Laid-Open No. 2007-240461).

However, those conventional channel sealing methods have the following problems.

In a channel sealing operation according to a thermal compression bonding method, channel deformation due to heat or defective bonding often occurs due to uneven application of pressure. As a result, the channel is flattened, or a leakage path is formed between the joining faces, for example. Because of those defects, process stability is poor. Also, it is necessary to perform processes such as a gradual cooling process in addition to the heating process. Therefore, the number of processes is large, and the process throughput is low. In channel sealing operations according to an ultrasonic method, channel deformation often occurs due to frictional heat. In channel sealing operations according to a UV bonding method, patterning needs to be performed on an adhesive agent in conformity with the shape of each channel. Therefore, the production costs become higher, and the variation of the adhesive layer thickness tends to become larger.

Further, in a case where a microchannel chip is used as a surface plasmon resonance (SPR) sensor (see Japanese Patent Application Laid-Open No. 2008-216055), various kinds of antibodies are attached to the sensor surface on the channels. However, antibodies are easily affected by heat, and are easily deactivated through heating or ultraviolet irradiation.

In such a sensor, a prism for allowing light to be emitted onto the sensor surface is attached to the channel chip in an integrated manner. However, the prism and the channel chips are structures independent of one another, and therefore, require meticulous care to handle. For example, where a matching oil method of dripping matching oil onto the joining face between the prism and the chip is used, applying and wiping away the matching oil is troublesome, and errors and the like might be caused due to air bubbles. According to an optical gel method by which optical gel is interposed between the joining faces of a prism and a channel chip, errors are caused due to contamination in the optical gel or air bubbles. Therefore, a pressing mechanism especially for the optical gel needs to be provided. To eliminate such complication, a device that has a prism and a channel chip integrated with each other beforehand has been suggested. However, it is difficult to produce such a device, since the prism is deformed by the heat used in the channel sealing operation.

SUMMARY OF THE INVENTION

An object of the present invention is to provide a channel chip that has excellent manufacturability and enables stable sensing operations.

To achieve the above object, the present invention provides the following products.

According to a first aspect, there is provided a channel chip comprising a substrate made of a material capable of transmitting light, the substrate comprising a groove to form a channel for allowing fluid flow. The channel chip further comprises a film made of a material capable of transmitting light, the film being bonded to the substrate with a pressure sensitive adhesive agent to seal the groove.

The groove formed in the substrate can be sealed at ambient temperature. In other words, channel sealing can be performed without a heating process. Accordingly, influence from heating, such as deformation of the substrate due to the heating, can be eliminated, and the process stability can be enhanced. Since deformation due to heating is restrained, products with high shape accuracy can be obtained, and highly precise sensing operations can be performed. Furthermore, since the heating process becomes unnecessary, other processes such as slow cooling accompanying the heating process also become unnecessary. Accordingly, the process throughput can be improved. As the channel chip can be manufactured without a heating process, the antibodies are not deactivated when the channel chip is used as a biosensor.

According to an embodiment, the substrate comprises a plurality of grooves to form a corresponding plurality of channels.

According to an embodiment, the channel chip further comprises a prism. When present, the prism is preferably integrated with the substrate.

Channel sealing can be performed at ambient temperature, without a heating process. Accordingly, a prism can be integrated with the substrate in advance. In other words, the complicated procedures for integrating a prism with the chip in a later stage as in a conventional case can be eliminated. Thus, the process throughput can be sensibly improved.

According to an embodiment, a through hole that connects the channel to the outside may be formed in the substrate.

A channel opening portion is preferably provided in the substrate. Preferably, the substrate has a higher rigidity than the film. Accordingly, deformation or flattening of the channel due to a connection with an external channel system (due to pressing of a tube or a sealing member against the channel, for example) can be prevented.

According to an embodiment, the opening portion of the external side of the through hole may be tapered and widens outwardly. More preferably, the opening portion may be formed by tapered portions having different angles so that the diameter increases outwardly.

Accordingly, when a channel member such as a tube of the external channel system is connected to the opening portion of the channel chip, the tapered face serves as a guide, and the channel member and the opening portion can be readily positioned to each other.

According to an embodiment, the substrate is made of molded resin. Preferably, the channel surface of the channel is made wider than the opening portion of the through hole in the region where the through hole is open.

Accordingly, when the substrate is manufactured by injection molding, misalignment between the channel and the through hole due to misalignment between the channel groove forming portion and the through hole forming portion of the metal molds and contraction and expansion of resin can be avoided. Thus, the moldability of the substrate can be improved.

According to an embodiment, the channel comprises at least two channels that do not connect to each other on the substrate. According to an embodiment, the channel chip further comprises a first metal film and a second metal film that do not connect to each other formed on the face of the substrate joined to the film. The first metal film is preferably formed in a region including part of the channel surface of one of the at least two channels, while the second metal film is preferably formed in a region including part of the channel surface of another one of the at least two channels.

For example, if the two metal films are formed in a continuous manner in a case where a SAM film is formed on the metal films, leaks might be caused between the two channels due to microgaps formed between the bonding faces of the substrate and the film caused by the SAM film formed on the metal films. According to an embodiment of the present invention, the two metal films are formed in a discontinuous manner. Accordingly, leaks due to a connection between the two channels can be restrained.

According to an embodiment, the channel chip further includes a supporting member made of a material capable of transmitting light, and comprise a flat face in contact with the face of the film located on the opposite side of the face bonded to the substrate.

With this arrangement, deformation of the film due to an increase in pressure of the fluid flowing in the channel can be restrained. Accordingly, a variation of the channel area due to deformation of the film can be reduced, and stable sensing operations can be performed.

According to an embodiment, the film may be bonded to the flat face.

With this arrangement, deformation of the film due to negative pressure generated inside the channel by a flow rate variation or the like can be restrained. Accordingly, the variation of the channel area can be more effectively reduced, and even more stable sensing operations can be performed.

According to an embodiment, the channel may be designed to allow light to be emitted to the fluid flowing in the channel.

As described above, according to the present invention, channel formation can be performed with high shape accuracy. Accordingly, in a sensing operation performed by emitting light to the fluid flowing in the channel, the sensing accuracy can be improved.

According to a further aspect, there is provided a jig for holding the channel chip as defined above, comprising a base on which the channel chip is intended to be placed, with the substrate facing downward, and a cover made of a material capable of transmitting light, and including a flat face intended to be put in contact with the face of the film located on the opposite side of the face bonded to the substrate.

According to the present invention, the flat face of the cover is in contact with the film, and accordingly, deformation of the film due to an increase in pressure of the fluid flowing in the channel can be restrained. Thus, the variation of the channel area due to deformation of the film can be reduced, and stable sensing operation can be performed.

As described above, the present invention can improve manufacturability and enables stable sensing operations.

## BRIEF DESCRIPTION OF THE DRAWINGS

Figs. 1A and 1B are schematic views of a channel chip according to a first embodiment;

Figs. 2A and 2B are schematic perspective views of the channel chip according to the first embodiment;

Figs. 3A and 3B are schematic views for explaining the structure of a SPR sensor;

Fig. 4 is a graph showing the antibody activities at respective heating temperatures;

Fig. 5 is a schematic cross-sectional view of a channel chip according to a comparative example;

Figs. 6A and 6B are schematic cross-sectional views of channel chips according to comparative examples;

Figs. 7A and 7B are schematic cross-sectional views of channel chips according to the first embodiment;

Figs. 8A through 8E are schematic views for explaining the positional relationships between grooves and through holes in a substrate;

Figs. 9A and 9B are schematic views for explaining a comparative example;

Figs. 10A and 10B are graphs showing the time variations of signals in the respective channels;

Figs. 11A and 11B are schematic views for explaining this embodiment;

Figs. 12A and 12B are graphs showing the time variations of signals in the respective channels;

Fig. 13 is a schematic view showing the structure of a jig for metal thin film patterning;

Figs. 14A and 14B are schematic views for explaining metal film sputtering;

Fig. 15 is a schematic cross-sectional view for explaining the relationship in size between a substrate and a mask;

Figs. 16A and 16B are charts showing the results of an evaluation experiment;

Figs. 17A through 17C are schematic views for explaining the structure of a jig for channel sealing;

Figs. 18A and 18B are schematic cross-sectional views for explaining the size settings for the squeegee top end;

Figs. 19A and 19B are schematic cross-sectional views for explaining the size settings for the squeegee top end;

Fig. 20 is a schematic cross-sectional view showing the structure of a holding jig according to the first embodiment;

Figs. 21A, 21B, and 21C are schematic views for explaining deformation of a channel;

Fig. 22 is a graph showing the displacement of the film surface at respective flow rates;

Figs. 23A and 23B are schematic views for explaining the influence of channel deformation on a sensing operation;

Figs. 24A and 24B are schematic views for explaining the influence of channel deformation on a sensing operation;

Fig. 25 is a schematic view showing the structure of a Localized Surface Plasmon Resonance (LSPR) sensor;

Fig. 26 is a graph showing the relationship between a flow rate variation and a signal variation in the first embodiment;

Fig. 27 is a schematic cross-sectional view of a channel chip according to a second embodiment;

Fig. 28 is a graph showing the relationship between a flow rate variation and a signal variation in the second embodiment;

Fig. 29 is a schematic perspective view of a microchannel chip according to a conventional technique; and

Fig. 30 is a schematic cross-sectional view of the microchannel chip according to the conventional technique.

## DETAILED DESCRIPTION OF EMBODIMENTS

The following is a detailed description of exemplary embodiments for carrying out the invention, with reference to the accompanying drawings. However, it should be noted that the sizes, materials, shapes, and relative locations of the components of the embodiments are not limited to those described below, unless otherwise specified.

(First Embodiment)

Referring now to Figs. 1A through 2B, a channel chip according to a first embodiment of the present invention is described. Figs. 1A and 1B are schematic views of the channel chip according to this embodiment. Fig. 1A is a schematic plan view of the channel chip, and Fig. 1B is a cross-sectional view of the channel chip, taken along the line A-A of Fig. 1A. Figs. 2A and 2B are schematic perspective views of the channel chip according to this embodiment. Fig. 2A illustrates a situation where a substrate and a film are separated from each other, and Fig. 2B illustrates a situation where the film is bonded to the substrate.

In this embodiment described below, an exemplary case where a channel chip according to an embodiment of the present invention is used as a sensor chip of a so-called surface plasmon resonance sensor is described. However, the channel chip according to the present invention may be used in other structures.

<Channel chip>

As shown in Figs. 1A and 1B, the channel chip 1 according to this embodiment includes a chip main body 10 that substantially has a rectangular shape and is in the form of a thin plate, channels 11 extending inside the chip main body 10, openings 12 connecting the channels 11 to the outside of the chip main body 10, a prism 13 integrally molded with the chip main body 10, and metal films 14 formed inside the chip main body 10 and located above the prism 13.

The channel chip 1 according to this embodiment is a sensor chip comprising two channels as flow cells (reaction spaces). More specifically, the channels 11 comprise two channels: a first channel (cell 1) 11a and a second channel (cell 2) 11b. The two channels form the two flow cells (hereinafter, the two channels 11a and 11b will be referred to collectively as the channels 11, as long as there is no need to distinguish the two channels from each other). The two channels 11a and 116 extend inside the chip main body 10 in the longitudinal direction of the chip main body 10, and are folded back above the prism 13 in opposite directions from each other. With this structure, the two channels 11a and 11b do not communicate with each other in the channel chip 1.

As for the openings 12, in this embodiment two of them are provided for each of the two channels 11a and 11b. The openings 12 form the inlets and outlets of the respective channels.

According to this embodiment, the metal films 14 are formed at two locations corresponding to the two channels 11a and 11b inside the chip main body 10. The regions in which the metal films 14 are formed are internal regions of the chip main body 10 including part of the channel surfaces of the channels 11, and also are regions on which light is emitted via the prism 13. More specifically, the metal films 14 are formed as a first metal film 14a and a second metal film 14b (hereinafter referred to collectively as the metal films 14, as long as there is no need to distinguish the two films from each other) at the folded-back portions and in the vicinities of the folded-back portions of the two channels 11a and 11b. The first metal film 14a and the second metal film 14b are formed independently of each other inside the chip main body 10.

As shown in Fig. 2, the channel chip 1 (or the chip main body 10) is formed by bonding a film 3 to a substrate 2.

The substrate 2 includes a substrate main body 20, grooves 21 that form the channels 11, and through holes 22 that form the openings 12. The prism 13 is integrally molded with the portions below the folded-back portions of the grooves 21. The substrate 2 is made of a material that can transmit light. The material may be a transparent resin such as plastic, or glass, for example. Concave portions 24 for positioning the substrate 2 to a fixture (not shown) are provided in the lower face of the substrate main body 20.

The grooves 21 are formed in the joint surface between the substrate main body 20 and the film 3. The channels 11 are formed by sealing the grooves 21 with the film 3 bonded to the substrate 2. The through holes 22 penetrate through the substrate main body 20, extending from the groove bottom faces of the grooves 21 to the lower face of the substrate main body 20 (the opposite face from the joint surface between the substrate main body 20 and the film 3). The opening portions of the external sides of the through holes 22 (or on the lower face side of the substrate 2) are tapered to widen outwardly. The tapered opening portions each have a two-level tapered structure, having a diameter that increases outwardly.

The metal films 14 are stacked on regions including the folded-back portions of the grooves 21 in the joint surface between the substrate main body 20 and the film 3. An organic molecular layer for immobilizing biomolecules is formed on the surface of each of the metal films 14. In other words, antibodies (probes) that can be coupled to a certain kind of protein (antigen) are immobilized.

The film 3 is a pressure sensitive adhesive film having a pressure sensitive adhesive agent applied to its one side. The film 3 is designed so that the adhesive agent exhibits its adhesiveness by virtue of the pressure applied when pressed against the object subjected to the bonding. The film 3 is made of a material that can transmit light, or a transparent resin such as plastic.

The pressure sensitive adhesive agent applied onto the film 3 is not particularly limited, and may be any conventional pressure sensitive adhesive agent, as long as it has light transmission properties, exhibits adhesiveness at ambient temperature, and exhibits sufficient adhesive properties for the substrate 2 (see Japanese National Publication of International Patent Application No. 2001-519455, for example).

<SPR sensor>

Referring now to Figs. 3A and 3B, a SPR sensor (of a propagation type) in which the channel chip according to this embodiment is used is described. Figs. 3A and 3B are schematic views for explaining the structure of the SPR sensor. Fig. 3A is a schematic view showing the structure of the optical system of the SPR sensor, and is a cross-sectional view taken along the B-B line of Fig. 3B. Fig. 3B is a schematic view showing the structure of the jig for positioning and holding the channel chip, and is a cross-sectional view taken along the line C-C of Fig. 3A.

The SPR sensor is a sensor that detects interactions of biomolecules such as proteins, utilizing surface plasmon resonance. Surface plasmon resonance is a resonance phenomenon between free electrons and light in a metal film surface. At a certain wavelength or a certain incident angle, the energy of incident light turns into vibrations of metal free electrons due to resonance, and the intensity of reflected light becomes markedly lower. The resonance conditions (the resonant wavelength and the resonant incident angle) vary with changes in permittivity (refractive index) of the substance existing around the metal film. In the SPR sensor, the antibodies (probes) to be specifically coupled to a certain type of protein (antigen) are immobilized beforehand to the metal film surface, and the antigen contained in a testing sample is coupled to the antibodies, so that the refractive index around the metal film varies. Accordingly, a sensing operation can be performed to determine whether antigen is contained in the testing sample and at what density the antigen is contained, by measuring changes in resonant wavelength and resonant incident angle before and after the introduction of a testing sample, and measuring temporal changes of those changes.

As shown in Fig. 3A, the SPR sensor 4 has an optical system that includes a single-color light source 40, collimator lenses 41 and 43, a condenser lens 42, a polarizer 44, a light receiving unit 45, and the like. A jig 5 positions and holds the channel chip 1 in the optical path of the light that is collected by the condenser lens 42.

The light emitted from the single-color light (monochromatic) source 40 is collimated by the collimator lens 41, is collected by the condenser lens 42, and then enters the prism 13 of the channel chip 1.

The light having entered the prism 13 then enters sensing areas in the channels 11 of the channel chip 1 (the regions in which the metal films 14 are formed).

Reflected light that is reflected by the sensing areas and exits the prism 13 is collimated by the collimator lens 43. The reflected light is polarized by the polarizer 44, and is then received by the light receiving unit 45. A data processing apparatus 46 such as a PC outputs a detection result, based on the information obtained from the reflected light received by the light receiving unit 45 (such as the intensity of the reflected light).

As shown in Fig. 3B, the jig 5 includes a base 51 on which the channel chip 1 is mounted, tubes 52 that are provided to penetrate the base 51, and a cover 53 that is a flat substrate placed on the upper face of the channel chip 1. The channel chip 1 is placed on the base 51 in such a manner that the face having the openings 12 and the prism 13 formed therein face downward. The tubes 52 are PEEK tubes of 1/16 inch in outer diameter, for example, and the end portions of the tubes 52 protruding from the seating surface of the base 51 are connected to the openings 12 of the channel chip 1. Sealing members 54 such as O-rings are provided on outer peripheries of the tubes 52. The sealing members 54 are elastically compressed between the channel chip 1 and the base 51, so that the connecting portions between the openings 12 and the tube 52 are sealed from the outside, and leaks to the outside can be prevented. The cover 53 is axially supported by a jig main body 50 in such a manner that the upper portion of the base 51 can be opened and closed.

The two channels 11 of the channel chip 1 are connected to pumps 47 for supplying a testing sample solution into the respective channels, and waste liquid pans 48 for collecting the testing sample solution having passed through the respective channels. One of the two channels is used as a target cell, and the other one is used as a reference cell. A sensor surface having various antibodies (probes) immobilized to a metal film is formed on each of the surfaces of the channels (the channel surfaces). Either of the channels can be used as a target or reference cell.

An example of a conventional method of producing a sensor surface is now briefly described. A metal film made of Au, Ag, or the like is formed on the surface of a cleaned substrate 2, and a SAM film (Self-Assembled Monolayer film) is formed on the metal film. The SAM film is activated by EDC (1-ethyl-3-(3'dimethylaminopropyl)-carbodiimide) and NHS (N-hydroxysuccinimide), to immobilize IgG antibodies (pH 4.0 to 6.0). The SAM film is inactivated by ethanolamine (pH 8.5), and is subjected to a treatment by Gly-HCl (pH 1.5 to 2.5).

<Advantages of this embodiment>

The advantages of the channel chip according to this embodiment are described below.

«Sealing at ambient temperature»

According to this embodiment, the channels of the channel chip can be formed or the grooves formed in the substrate can be sealed at ambient temperatures. In other words, the channel sealing can be performed without heating. Accordingly, deformation of the substrate or deformation of the channels due to heating can be restrained, and high-precision shaping can be performed in the manufacturing procedures. Thus, higher sensing accuracy can be achieved.

Since the heating process becomes unnecessary, other processes accompanying the heating process also become unnecessary. Accordingly, the manufacturing time can be sensibly shortened, and the manufacturing costs can be sensibly lowered, compared with those for a conventional chip that requires the heating process. For example, after heating and pressurization, a conventional chip requires the process to gradually cool down while being pressurized, and the process to continue to gradually cool down after the pressurizing is stopped. The conventional chip manufacturing time is approximately 7 minutes per chip. In this embodiment, on the other hand, only the sealing process (the bonding of the film to the substrate) is required, and the manufacturing time is sensibly shortened to approximately 30 seconds per chip.

According to this embodiment, a channel chip can be manufactured without a heating process, and the antibodies are not deactivated when the channel chip is used as a biosensor. Referring now to Fig. 4, this aspect is described. Fig. 4 is a graph showing the antibody activities at respective heating temperatures.

In this experiment, a SPR sensor (Biacore, manufactured by GE Healthcare) was used to confirm the activities (or maintenance of the inherent functions) of biomolecules at high temperatures. AFP antibodies were used as the biomolecules. AFP is a tumor marker for liver cancer. In this experiment, a substrate fixing plate made of copper was used, sensor chips were heated for six minutes at the respective temperatures of 50°C, 80°C, and 120°C, and signals were then detected by the SPR sensor.

As can be seen from Fig. 4, the activity at 50°C is approximately 50% of the activity at ambient temperature, and the activity at 80°C is approximately 30% of the activity at ambient temperature. Therefore, where antibodies are immobilized to a sensor chip, deactivation of the antibodies is easily caused by the heating at the time of sealing of the channels. For example, in a conventional channel chip having a sealing temperature of 80°C or higher, approximately 70% of the antibodies are deactivated. In this embodiment involving the sealing at ambient temperature, on the other hand, such deactivation is not caused.

Also, according to this embodiment, the prism can be integrated with the substrate in advance. More specifically, since in this embodiment the channels can be sealed at ambient temperature, there no deformation of the prism occurs due to heating, and the prism and the substrate can be manufactured at the same time. Accordingly, the complicated procedures for integrating the prism with the chip in a later stage as in a conventional case can be eliminated. Thus, the manufacturing time can be shortened, and the manufacturing costs can be lowered. Accordingly, the process throughput can be sensibly improved.

«Through holes being formed in the substrate»

According to this embodiment, the channel openings 12 are formed in the substrate 2, which has higher rigidity than the film 3. Accordingly, deformation or flattening of the channels due to a connection with an external channel system can be prevented. Referring now to Fig. 5, this aspect is described. Fig. 5 is a schematic cross-sectional view of a channel chip according to a comparative example that has through holes formed in a film.

As shown in Fig. 5, with through holes 32 being formed through the film 3, the film 3 is bent by the pressing from the tubes 52 and the sealing members 54, and the channels 11 might be destroyed. To avoid such a problem in the comparative example structure illustrated in Fig. 5, it is necessary to add a mechanism for preventing deformation of the film 3 due to pressing from the tubes 52 and the sealing members 54, such as a member or structure that supports the film 3 from inside. According to this embodiment, such a problem can be avoided by providing the through holes in the channel substrate that can readily maintain its rigidity.

«Tapered opening portions of the through holes»

According to this embodiment, the through holes in the substrate have tapered opening portions. Accordingly, alignment between the tubes 52 and the through holes 22 can be easily performed. More specifically, the tapered faces of the opening portions serve as guides, and accordingly, the tubes 52 and the openings 12 can be easily positioned to each other.

Referring now to Figs. 6A through 7B, this aspect is described. Figs. 6A and 6B are schematic cross-sectional views of channel chips according to comparative examples that do not have the opening portions of the through holes tapered. Fig. 6A is a cross-sectional view of a comparative example that has through holes each having substantially the same diameter as the tubes. Fig. 6B is a cross-sectional view of a comparative example that has through holes each having a larger diameter than the tubes. Figs. 7A and 7B are schematic cross-sectional views of channel chips according to this embodiment. Fig. 7A illustrates a case where each of the opening portions of the through holes has a one-level tapered structure. Fig. 7B illustrates a case where each of the opening portions of the through holes has a two-level tapered structure.

As shown in Fig. 6A, where the diameter of each of the openings 12 (the through holes 22) of the channel chip 1 is approximately equal to the outside diameter of each of the tubes 52, the alignment between the openings 12 and the tubes 52 becomes difficult. As shown in Fig. 6B, where the diameter of each of the openings 12 is greater than the tubes 52, leaks might be caused through the gaps at the joining portions.

As shown in Fig. 7A, in this embodiment, each of the through holes 22 is formed by a tapered portion 22a, an end face portion 22b, and a hole portion 22c, when seen from the outside toward the channel 11.

The tapered portion 22a is designed to have a diameter on its outside (on the side of the lower face of the substrate 2) that is greater than the outside diameter of the tube 52 and is smaller than the outside diameter of the sealing member 54. The diameter of the tapered portion 22a gradually becomes smaller toward the end face portion 22b, and the inside diameter at the boundary with the end face portion 22b is equal to or slightly greater than the outside diameter of the tube 52.

The through hole 22 is designed to have a diameter that becomes smaller at the end face portion 22b. The depth of the tapered portion 22a (the formation area of the tapered portion 22a in the axial direction (the penetrating direction) of the through hole 22) is equal to or slightly smaller than the length of the protruding portion of the tube 52. Accordingly, when the channel chip 1 is placed on the base 51, the end face of the top end of the tube 52 is brought into contact with the end face portion 22b.

The hole portion 22c is designed to have substantially the same diameter as the inside diameter of the tube 52. As the top end face of the tube 52 is brought into contact with the end face portion 22b of the through hole 22, a continuous channel is formed by the hole portion 22c of the through hole 22 and the tube 52.

With the above described structure, alignment of the channel chip 1 with respect to the base 51 of the jig 5 becomes easier. More specifically, when the channel chip 1 is placed on the base 51, the tapered portions 22a serve as guides to correct the position of the channel chip 1, even if the positions of the through holes 22 (the openings 12) and the tubes 52 deviate from each other. Accordingly, the channel chip 1 can be easily set in a desired position.

Also, the top end faces of the tubes 52 are brought into contact with the end face portions 22b of the through holes 22, and continuous channels are formed by the hole portions 22c of the through holes 22 and the tubes 52. Accordingly, samples can be supplied into the channels 11 of the channel chip 1, without any waste. Thus, the dead volumes of the samples can be minimized.

At this point, the taper angle $\alpha$ of each tapered portion 22a (the angle with the end face portion 22b) is preferably within the range of 90 to 100 degrees. Within such a range, falling of the tubes 52 and leaks can be effectively restrained.

Also, as shown in Fig. 7B, it is preferable to change the taper angle at two levels. To widen the allowable error of a position gap, the opening portions of the tapered portions need to be made wider. In other words, the taper angle needs to be made larger. However, if the taper angle is made larger, the tubes might fall off, or there might be leaks. To avoid such problems, each tapered portion 22a is formed by joining a tapered portion 22a1 for chip alignment and a tapered portion 22a2 for holding a tube in a continuous manner. With this arrangement, a position gap error is allowed (the chip can be easily set), and the tubes can be firmly held when the chip is set.

In the embodiment, the taper angle $\beta$ of the tapered portion 22a2 for holding a tube is 95 degrees, and the taper angle $\gamma$ of the tapered portion 22a1 for alignment is 135 degrees.

The structures of the through holes 22 can be manufactured together with the channel portions (the portions of the grooves 21) by injection molding, and the chip costs can be lowered. Although a two-level tapered structure is employed in this embodiment, the present invention is not limited to that. For example, a structure having taper angles varying at several levels, such as a three-level tapered structure, may be employed, instead of the two-level tapered structure.

«Channel face areas being wider in the opening regions of the through holes than in the opening portions of the through holes»

According to this embodiment, the channel face areas are made wider in the regions of the opening portions of the through holes than in the opening portions of the through holes. Accordingly, the moldability of the substrate can be improved where the substrate is manufactured by injection molding.

In a case where the substrate of a channel chip according to this embodiment is manufactured by injection molding, groove forming portions (convex portions extending along the shapes of the channels) are formed in one of the metal molds, and through hole forming portions (pins each having a tapered portion at the bottom) are formed in the other one of the metal molds. To reduce the amount of samples to be fed into the channels in a channel chip, the dead volumes in the channels need to be made smaller. To do so, misalignment between the grooves and the through holes needs to be avoided.

In this embodiment, the shape of the substrate is designed so that the channel face areas become wider in the opening regions of the through holes of the channels than in the opening portions of the through holes, or the shapes of the metal molds are designed so that the areas of the upper faces of the groove forming portions become wider than the pin diameters of the through hole forming portions (the diameters of the hole portions 22c). With this arrangement, it is possible to absorb misalignment between the pins and the pin engaging portions in the metal molds, and misalignment between the grooves and the through holes due to expansion and contraction of resin or the like. Accordingly, the dead volumes can be reduced.

Referring now to Figs. 8A through 8E, this aspect is described. Figs. 8A through 8E are schematic views for explaining the positional relationships between grooves and through holes in a substrate. Fig. 8A illustrates a comparative example, Fig. 8B illustrates this embodiment, and Figs. 8C through 8E illustrate modifications. In each of those drawings, the left half is a top view of a substrate, and the right half is a cross-sectional view of the substrate.

Fig. 8A illustrates a structure achieved in a case where groove forming portions and through hole forming portions are formed in one of the two metal molds. In this case, it is not necessary to perform alignment between the grooves and the through holes, and there are no dead volumes in the channels.

In this embodiment, however, the tapered portions 22a of the through holes 22 are undercut portions, and therefore, the above metal mold structure cannot be employed.

As shown in Fig. 8B, in this embodiment, the bottom faces of the grooves 21 in the regions of the opening portions of the through holes 22 have substantially circular shapes that are substantially concentric with respect to the through holes 22. Also, the diameter of each of the substantially circular portions is larger than the diameter of each of the through holes 22. In other words, in the metal molds for molding, the pin engaging portions at the groove forming portions are made wider than the diameters of the top ends of the pins in the through hole forming portions. More specifically, the diameter of the top end of each pin in the through hole forming portions is $\phi$360 um, and the diameter of each pin engaging portion in the groove forming portions is $\phi$700 um. With this arrangement, misalignment between the pins and the engaging portions can be prevented.

As shown in Fig. 8C, misalignment can be prevented by enlarging each pin engaging portion in the channel direction, with the resin contraction and expansion in the channel direction at the time of molding being taken into consideration. Also, as shown in Fig. 8D, misalignment can be more easily prevented by forming the cross-section of the top end of each pin into a rectangular shape or an elliptical shape. Further, as shown in Fig. 8E, misalignment may be prevented by making the top end area of each pin larger than the engaging portion area of each pin.

«Metal film being divided into plural regions corresponding to the channels»

According to this embodiment, where a metal film is formed on the channel faces of channels of a channel chip and is used as a sensor face, the metal film is divided into regions corresponding to the channels, so as to restrain leaks of fluids between the channels.

Referring now to Figs. 9A through 12B, this aspect is described. Figs. 9A and 9B are schematic views for explaining a comparative example in which a metal film is not divided into regions. Fig. 9A is a top view of a channel chip, and Fig. 9B is a cross-sectional view of the channel chip, taken along the line D-D of Fig. 9A. Figs. 10A and 10B are graphs showing the time variations of signals in the respective channels. Fig. 10A shows the signal variation in one of the channels (cell 1), and Fig. 10B shows the signal variation in the other channel (cell 2). Figs. 11A and 11B are schematic views for explaining this embodiment. Fig. 11A is a top view of a channel chip, and Fig. 11B is a cross-sectional view of the channel chip, taken along the line E-E of Fig. 11A. Figs. 12A and 12B are graphs showing the time variations of the signals in the respective channels. Fig. 12A shows the signal variation in one of the channels (cell 1), and Fig. 12B shows the signal variation in the other channel (cell 2).

As shown in Figs. 9A and 9B, in the channel chip 1' according to the comparative example, one layer of a metal film 14 is formed between a substrate 2 and a film 3, so as to form a metal film for sensing operations on the respective channel faces of two channels 11a and 11b. As described above, a SAM film 15 for immobilizing the antibodies for sensing operations is formed on the surface of the metal film 14, before the film 3 is stacked on the substrate 2.

A leak experiment was carried out on the channel chip 1' according to the comparative example having the above described structure. First, a buffer (HBS-P) was introduced into both the channel 11 a (cell 1) and the channel 11 b (cell 2) at a flow rate of 80 ul/min. With the cell 1 being filled with the buffer, pure water (Mill-Q) was introduced into the cell 2 at a flow rate of 20 ul/min.

As shown in Figs. 10A and 10B, as a result of the above described experiment, the same SPR signal variation as that in the cell 2 was caused in the cell 1. Specifically, with the cell 1 being filled with the buffer, the cell 2 was switched to the pure water at the time indicated by the arrow B in the graphs. The same SPR signal variation as that in the cell 2 was then observed in the cell 1 until the cell 2 was switched to the buffer at the time indicated by the arrow C (during the B-C period). A signal variation could not have been caused in the cell 1 because a fluid in cell 1 was not switched, and this result was obtained supposedly because the pure water in the cell 2 leaked into the cell 1. Also, this leak can be considered to have been caused by the SAM film existing between the two cells. Specifically, the SAM film existing between the two cells supposedly causes microgaps between the bonding faces of the substrate 2 and the film 3, and sample solutions pass through the gaps due to a capillary action.

As shown in Figs. 11A and 11B, in the channel chip 1 according to this embodiment, the region in which the metal films 14 are formed is divided into two regions. Specifically, a first metal film 14a is formed in a region including part of the channel 11 a, and a second metal film 14b is formed in a region including part of the other channel 11 b. A region in which no metal films are formed is provided between the two metal films (the two metal films are not connected to each other). Since a SAM film is formed on each of the metal films, the substrate 2 and the film 3 are bonded directly to each other in the region between the two metal films, with nothing being interposed between the substrate 2 and the film 3. Although it looks as though a space is formed between the two metal films in the drawing, the space between the two metal films is flattened, since the film 3 is bonded to and pressed against the substrate 2.

As shown in Figs. 12A and 12B, the same leak experiment as above was carried out on the channel chip 1 of this embodiment, and it was confirmed that the leaks caused in the comparative example did not occur in this embodiment. Specifically, at the time indicated by the arrow A in the graphs, a buffer (HBS-P) was first introduced into the cell 1 and the cell 2 at a flow rate of 80 ul/min. At the time indicated by the arrow B in the graphs, pure water (Mill-Q) was introduced into the cell 2 at a flow rate of 20 ul/min, with the cell 1 being filled with the buffer. At the time indicated by the arrow C in the graphs, the cell 2 was switched to the buffer. As a result, the SPR signal did not change in the cell 1 unlike the SPR signal in the cell 2, as can be seen from Fig. 12A. Accordingly, it was confirmed that leaks were prevented as a SAM film did not exist between the channels. In view of this, a sensor chip that does not have leaks can be manufactured by performing patterning in conformity with the shapes of the channels at the time of formation of the metal thin films.

<Metal thin film patterning>

Referring now to Figs. 13 through 16B, the metal thin film patterning in the channel chip according to this embodiment is described. Fig. 13 is a schematic view showing the structure of a jig for metal thin film patterning. Figs. 14A and 14B are schematic views for explaining metal film sputtering. Fig. 14A is a schematic cross-sectional view of a substrate and a mask, illustrating the sputtering. Fig. 14B is a schematic cross-sectional view of the substrate 2. Fig. 15 is a schematic cross-sectional view for explaining the relationship in size between the substrate and the mask. Figs. 16A and 16B are charts showing the results of an evaluation experiment.

As shown in Figs. 13A and 13B, a jig 6 for metal thin film patterning includes a fixture 60 that holds and secures substrates 2, and a mask 61 for sputtering. The fixture 60 has concave portions 62 into which the substrates 2 can be fit. The mask 61 has openings 63 that define the formation regions of metal films. The substrates 2 are fit into and fixed in the concave portions 62 of the fixture 60, and the substrates 2 are covered with the mask 61 so that only the regions in which metal films are to be formed are exposed to the outside. The sputtering for forming metal films is then performed. In this manner, the substrates 2 having the desired metal films 14 patterned thereon can be manufactured.

As shown in Fig. 14A, if the size (the width) of each opening 63 of the mask 61 is substantially equal to the size (the width) of each groove 21, sputtering particles entering obliquely only reach the center portion of each groove 21, and do not reach the edges of each groove 21. As a result, the variation of the thickness of each metal film 14 in the grooves 21 becomes larger than in a case where a mask is not used, and each metal film 14 is thicker at the center portion of each groove 21 than at the edges, as shown in Fig. 14B. The variation of the thickness results in the in-plane variation of optical characteristics when the metal films are used for SPR.

As shown in Fig. 15, in this embodiment, the mask 61 has the openings 63 of an appropriate size, and has an appropriate thickness, so as to restrain the variation of the thickness of each metal film 14 caused by the mask 61 at the time of sputtering. Specifically, where Wr represents the groove width, $T_r$ represents the groove depth, and $T_m$ represents the thickness of the mask 61, the opening width $W_m$ of the mask 61 should satisfy the relationship expressed by the following expression:

$$W_m \geq \left( \frac{2T_m}{T_r} + 1 \right) \cdot W_r$$

For example, where a mask 61 having a thickness ($T_m$) of 0.1 mm is used for substrates 2 each having a groove width ($W_r$) of 0.5 mm and a groove depth ($T_r$) of 50 um, the opening width of the mask 61 is preferably 2.5 mm or greater. By using such a mask 61, the sputtering in-plane variation in the grooves can be made substantially the same as that in a case where the mask 61 is not used.

As shown in Figs. 16A and 16B, an evaluation experiment using the above relational expression was carried out. Fig. 16A is a table showing the conditions in the evaluation experiment. Fig. 16B is a graph showing the relationship between the mask size and the variation. Metal film sputtering was performed while the conditions for the mask were varied as shown in Fig. 16A, and the film thickness variations under the respective conditions were evaluated. The results confirm that the film thickness variation becomes smaller when $W_m \geq$ is satisfied in the following expression, and that saturation is almost achieved.

$$A = \left( \frac{2T_m}{T_r} + 1 \right) \cdot W_r$$

In view of this, sputtering should preferably be performed with the use of a mask that satisfies the following condition:

$$W_m \geq \left( \frac{2T_m}{T_r} + 1 \right) \cdot W_r$$

<Jig for sealing the channels>

Referring now to Figs. 17A through 19B, a jig for sealing the channels of the channel chip 1 according to this embodiment is described. Figs. 17A through 17C are schematic views for explaining the structure of the jig for sealing the channels. Fig. 17A is a schematic view of a film sheet 30 having films 3 formed thereon. Fig. 17B is a schematic view of a fixture 70 for fixing and holding substrates 2. Fig. 17C is a schematic view illustrating channel sealing. Figs. 18A and 18B are schematic cross-sectional views for explaining preferred size settings for the top end of a squeegee in channel sealing. Fig. 18A illustrates a situation observed before the squeegee is pressed against a substrate 2, and Fig. 18B illustrates a situation observed after the squeegee is pressed against the substrate 2. Figs. 19A and 19B are schematic cross-sectional views for explaining preferred size settings for the top end of a squeegee in channel sealing. Fig. 19A illustrates a situation observed before the squeegee is pressed against a substrate 2, and Fig. 19B illustrates a situation observed after the squeegee is pressed against the substrate 2.

As shown in Figs. 17A through 17C, in this embodiment, several channels can be simultaneously sealed in one operation with the use of a channel sealing jig 7 that includes the fixture 70 that positions and holds the substrates 2 and a squeegee 71 that presses the films 3 against the substrates 2.

As shown in Fig. 17A, the film sheet 30 has the films 3 formed in the longitudinal direction and in parallel to one another, and also has through holes 31 for alignment with the fixture 70. The film sheet 30 is cut to have the same size (48 mm x 6 mm) as the sealed portions of the substrate 2 (the face having the grooves 21 formed therein). A protection sheet is bonded to the face of the sheet 30 to which a pressure sensitive adhesive agent is applied.

As shown in Fig. 17B, the fixture 70 includes concave portions 72 into which the substrates 2 are to be fit, and pins 73 for alignment with the film sheet 30. The concave portions 72 are formed at the same pitch as the formation pitch of the films 3 of the film sheet 30, and are designed to arrange the substrates 2 in parallel in the longitudinal direction.

As shown in Fig. 17C, the pins 73 are inserted in the through holes 31, so that the films 3 from which the protection sheet has been removed is placed on the face of the fixture 70 having the substrates 2 arranged in parallel. The squeegee 71 is then pressed against the back face of the film sheet 30, and slides in the longitudinal direction. By virtue of the pins 73 and the through holes 31, the alignment between the films 3 and the substrates 2 can be more easily performed with higher precision. In this embodiment, the diameter of each through hole 31 of the film sheet 30 is 4 mm, and the pitch of the through holes 31 is 34.3 mm. The diameter of each pin 73 of the fixture 70 is 3.9 mm, and the pitch of the pins 73 is 34.3 mm. The squeegee 71 has a width that satisfies the width of each of the arranged channel chips, and is able to simultaneously seal the channels of the channel chips by one sliding operation.

Here, if the radius R of the top end of the squeegee 71 is too small as shown in Figs. 18A and 18B, the films 3 reach the bottoms of the grooves 21, and hinder the flow of the fluid in the channels 11. Therefore, the radius R of the top end of the squeegee 71 should have an appropriate value.

Where the thickness of each film 3 is small (where the thickness can be ignored), the following relationship is established:

$$X = \sqrt{R^2 - (W_r/2)^2}$$

To prevent the squeegee 71 (the channel-side face of each film 3) from reaching the bottoms of the channels, the following relationship should be satisfied:

$$R - X < T_r$$

According to the above expression, the radius R is expressed as follows:

$$R > \frac{T_r^2 + (W_r/2)^2}{2T_r}$$

Accordingly, the squeegee 71 should satisfy the above relationship.

Where the channel depth ($T_r$) is 50 um and the channel width ($W_r$) is 0.5 mm, for example, R is larger than 0.65 mm. In this embodiment, the squeegee top end radius R is 1.5 mm. If there are channels with different sizes, the squeegee top end radius R is set larger than the largest one of the channels.

Where the thickness of each film 3 cannot be ignored (where the thickness of each film 3 is not small enough for the channel depth) as shown in Figs. 19A and 19B, the radius R of the top end of the squeegee 71 may be determined, with the film thickness being taken into consideration. In that case, the apparent radius of the squeegee 71 becomes larger by the thickness of each film 3, and therefore, a squeegee that satisfies the relationship expressed by the following expression should be used.

$$R > \frac{T_r^2 + (W_r/2)^2}{2T_r} - T_f$$

Where the channel depth ($T_r$) is 50 um, the channel width ($W_r$) is 0.5 mm, and the thickness of each film 3 is 10 um, for example, R is larger than 0.55 mm. In this embodiment, R is 1.5 mm. If there are channels with different sizes, R is set larger than the largest one of the channels.

<Holding jig>

Referring now to Figs. 20 through 24B, a jig for holding a channel chip according to the embodiment of the present invention is described. Fig. 20 is a schematic cross-sectional view showing the structure of the holding jig according to this embodiment. Figs. 21A through 21C are schematic views for explaining deformation of a channel. Fig. 21A illustrates a situation prior to a fluid supply, Fig. 21B illustrates a situation during a fluid supply, and Fig. 21C is a cross-sectional view taken along the line F-F of Fig. 21B. Fig. 22 is a graph showing the displacement of the film surface at respective flow rates. Figs. 23A and 23B are schematic views for explaining the influence of channel deformation on a sensing operation. Fig. 23A is a schematic cross-sectional view of the channel chip, and Fig. 23B is a graph showing the signal variation at the time of a change in flow rate. Figs. 24A and 24B are schematic views for explaining the influence of channel deformation on a sensing operation according to the embodiment. Fig. 24A is a schematic cross-sectional view of the channel chip, and Fig. 24B is a graph showing the signal variation at the time of a change in flow rate.

The holding jig 5 according to this embodiment is a jig for positioning and holding the channel chip 1 in a detection apparatus such as the SPR sensor illustrated in Figs. 3A and 3B. The structure of the holding jig 5 is basically the same as the structure illustrated in Fig. 3B, and therefore, explanation of it is not repeated here. Instead, only the characteristic aspects are described here.

The holding jig 5 according to this embodiment has a cover 53 formed by a flat substrate placed on the upper face of the channel chip 1. The flat substrate forming the cover 53 may be a glass plate, for example. With the flat cover 53 being placed on the upper face of the channel chip 1, deformation such as flexure of each film 3 due to fluid pressure in the channels can be restrained, and influence on the detection accuracy can be reduced.

Referring now to Figs. 21A through 23B, the influence in a case where a flat cover like the cover 53 of this embodiment for preventing the flexure of the filters 3 is not provided is described.

As shown in Figs. 21A through 21C, when a fluid is supplied into a channel 11 sealed by a film 3, the film 3 bends due to fluid pressure, and the channel area greatly changes at the center portion of the channel 11. Also, as shown in Fig. 22, the displacement of the film surface increases as the fluid pressure (or the flow rate) becomes higher.

As shown in Figs. 23A and 23B, the deformation of the channel 11 due to the deformation of the film 3 also affects the sensing operation. Here, the influence on sensor signals at the time of variation of pressure was checked with the use of the Localized Surface Plasmon Resonance (LSPR) sensor disclosed in Japanese Patent Application Laid-Open No. 2008-216055.

As shown in Fig. 23A, this sensor has white light perpendicularly incident on the sensor surface, and senses the wavelength (the peak wavelength) at which the minimum value of reflectance of the reflected light is obtained. Channels 11 of 200 um in depth were formed on the surface of the Localized Surface Plasmon Resonance (LSPR) sensor, and pure water was supplied into the channel chip 1 sealed by the film 3. A Localized Surface Plasmon Resonance (LSPR) signal was then detected.

As shown in Fig. 23B, when the flow rate was changed from 20 ul/min to 40 ul/min, a change is caused in the signal. This is supposedly because the reflectance changed due to flexure of the film 3.

As shown in Figs. 24A and 24B, by providing the cover 53 formed by a flat substrate on the film 3, the influence from flexure of the film 3 was eliminated, and there was not a change in signal when the flow rate was changed. With this structure, stable sensor signals can be obtained.

< Localized Surface Plasmon Resonance (LSPR) sensor>

Referring now to Fig. 25, an examplary structure in a case where the channel chip 1 according to this embodiment is used in a Localized Surface Plasmon Resonance (LSPR) sensor is described. Fig. 25 is a schematic view showing the structure of the Localized Surface Plasmon Resonance (LSPR) sensor. The examplary structure described here is merely an example, and the present invention is not limited to this examplary structure. Various other kinds of conventional structures may of course be used in the present invention. The same components as those in the examplary structure illustrated in Figs. 3A and 3B will not be repeated in the following, and only the different aspects from the examplary structures illustrated in Figs. 3A and 3B will be described.

As shown in Fig. 25, the Localized Surface Plasmon Resonance (LSPR) sensor 8 has an optical system that includes a light source 80 such as a halogen lamp, iris diaphragms 81 and 84, a collimator lens 82, a polarizer 83, a half prism 85, a condenser lens 86, a spectrometer 87, and the like. The channel chip 1 is positioned and held by the jig 5 on the optical path of the light gathered by the condenser lens 86.

The light emitted from the light source 80 is narrowed by the iris diaphragm 81, and is guided to the collimator lens 82. Of the light collimated by the collimator lens 82, only the linearly-polarized light passes through the polarizer 83. Having passed through the polarizer 83, the linearly-polarized light is narrowed by the iris diaphragm 84, and enters the half prism 85. Of the light having entered the half prism 85, about 1/2 of the amount of the incident light passes through the half prism 85 straight ahead, also passes through the condenser lens 86, and is gathered onto the sensing areas of the channel chip 1.

The light emitted onto the sensing areas of the channel chip 1 is reflected by the sensing areas, and returns toward the originating point. The light passes through the condenser lens 86, and again enters the half prism 85. Of the light having entered the half prism 85, about 1/2 of the amount is reflected inside the half prism 85 at an angle of 90 degrees. The reflected light deflected by the half prism 85 passes through the spectrometer 87, and is dispersed into light of respective wavelengths. The dispersed light is received by a photodetector integrated with the spectrometer 87. The spectrometer 87 is designed to be able to detect the light intensity at each wavelength. In this embodiment, a spectrometer manufactured by Ocean Optics (Name of product: USB4000) is used as the spectrometer 87. A data processing apparatus 88 such as a PC compares the light intensity at each wavelength detected by the spectrometer 87 with the light intensity at each wavelength supplied beforehand as data. By doing so, the data processing apparatus 88 can determine the spectroscopic characteristics of the reflectance (the reflectance spectrum) at each wavelength in the channel chip 1.

The structure of the channel chip 1 slightly varies between a case where it is used in a Localized Surface Plasmon Resonance (LSPR) sensor and a case where it is used in the propagation SPR sensor (Figs. 3A and 3B). Where the channel chip 1 is used in a Localized Surface Plasmon Resonance (LSPR) sensor, a prism is not integrated with the substrate 2. Also, in the sensing areas of the channels 11, concave microportions are formed in the surface of each metal layer 14 (concave structures formed by metal films). As the energy of the light incident on the metal layers 14 concentrates on the concave portions by virtue of surface plasmon resonance, the light incident on the metal layers 14 is partially absorbed. As a result, the reflectance determined from the light received in the spectrometer 87 becomes smaller at a certain wavelength (the resonant wavelength). This wavelength varies with the refractive indexes of testing samples. Accordingly, by checking the wavelength or the variation of the minimum point of reflectance, the refractive index and the type of the dielectric substance contained in each testing sample can be sensed. Also, by using an antibody that is specifically bonded to a certain type of protein, it is possible to sense the presence and the amount of the certain type of protein in each testing sample.

<Others>

Examples of how the channel chip 1 of this embodiment is used are not limited to the above described ones. The channel chip 1 of this embodiment can of course be used in cases involving a conventional technique such as a method utilizing fluorescent molecules, an absorbance determination method, or an electrochemical measurement method. Alternatively, only the fluid processing such as mixing or separating may be performed on the microchannel chip, and sensing operations may be performed outside the chip.

The substrate having grooves formed therein is not necessarily manufactured by injection molding with the use of metal molds as described above. Instead, such a substrate may be manufactured by forming a channel pattern on the substrate by etching or the like.

(Second Embodiment)

Referring now to Figs. 26 through 28, a channel chip according to a second embodiment of the present invention is described. Fig. 26 is a graph showing the relationship between a flow rate variation and a signal variation in a channel chip according to the first embodiment. Fig. 27 is a schematic cross-sectional view of the channel chip according to the second embodiment. Fig. 28 is a graph showing the relationship between a flow rate variation and a signal variation in the channel chip according to the second embodiment. The same aspects as those of the first embodiment are not repeated herein, and only the different aspects from the first embodiment are described.

As shown in Fig. 26, where the flow rate greatly varies, displacement of the film 3 might not be sufficiently restrained simply by placing the flat substrate on the outer face of the film 3 as in the first embodiment. Particularly, in a case where the flow rate varies from a high flow rate to a low flow rate, negative pressure is generated inside the channels 11, and the film 3 moves toward the channels 11.

As shown in Fig. 27, in the channel chip 1a according to this embodiment, a substrate (a holding member) 9 made of a material such as glass that can transmit light is bonded to the outer face of the film 3 with an adhesive agent 90. As the substrate 9 having higher rigidity than the film 3 is bonded to the film 3, displacement of the film 3 at the time of a change in flow rate can be restrained. To bond the substrate 9 onto the film 3, a transparent adhesive agent that can transmit light is applied onto the surface of the film 3 with a roller or the like, and the substrate 9 is placed on the adhesive agent.

As can be seen from Fig. 28, even when the flow rate varies, the signal hardly changes. In other words, displacement of the film 3 is restrained by the substrate 9 serving as a holding member.

The substrate 9 may be a transparent substrate such as a plastic plate. The shape of the holding member is not limited to the flat shape of the substrate 9. The holding member may have any other shape, as long as it can restrain displacement of the film 3 and does not affect the sensing operations.

DESCRIPTION OF REFERENCE NUMERALS

1 channel chip

10 chip main body

11 channels (cells)

12 openings

13 prism

14 metal films

2 substrate

20 substrate main body

21 grooves

22 through holes

4 SPR sensor

40 single-color light source

41 collimator lens

42 condenser lens

43 collimator lens

44 polarizer

45 light receiving unit

46 data processing apparatus

47 pump

48 waste liquid pan

5 jig

50 jig main body

51 base

52 tubes

53 cover

54 sealing members

## Claims

**1.** A channel chip (1) comprising:

a substrate (2) made of a material capable of transmitting light, the substrate (2) comprising a groove (21) to form a channel (11) for allowing fluid flow; and
a film (3) made of a material capable of transmitting light, the film (3) being bonded to the substrate (2) with a pressure sensitive adhesive agent to seal the groove (21).

**2.** The channel chip (1) according to claim 1, further comprising a prism (13) integrated with the substrate (2).

**3.** The channel chip (1) according to claim 1 or 2, wherein a through hole (22) connecting the channel (11) to outside is formed in the substrate (2).

**4.** The channel chip (1) according to claim 3, wherein an opening portion (12) of an external side of the through hole (22) is tapered and widens outwardly.

**5.** The channel chip (1) according to claim 4, wherein the opening portion (12) is formed by a plurality of tapered portions (22a1, 22a2) having different angles so that the diameter increases outwardly.

**6.** The channel chip (1) according to claim 4 or 5, wherein
the substrate (2) is made of molded resin, and
a channel surface of the channel (11) is made wider than the opening portion (12) of the through hole (22) in a region where the through hole (22) is open.

**7.** The channel chip (1) according to any of claims 1 through 6, wherein
the channel (11) comprises at least two channels (11a, 11b) that do not connect to each other on the substrate (2),
the channel chip (1) further comprising
a first metal film (14a) and a second metal film (14b) that do not connect to each other formed on a face of the substrate (2), the face being joined to the film (3), the first metal film (14a) being formed in a region including part of a channel surface of one of the at least two channels (11a, 11b), the second metal film (14b) being formed in a region including part of a channel surface of another one of the at least two channels (11a, 11b) .

**8.** The channel chip (1) according to any of claims 1 through 7, further comprising
a supporting member (9) made of a material capable of transmitting light and including a flat face in contact with the face of the film (3) located on the opposite side of the face bonded to the substrate (2).

**9.** The channel chip (1) according to claim 8, wherein the film (3) is bonded to the flat face.

**10.** The channel chip (1) according to any of claims 1 through 9, wherein the channel (11) is designed to allow light to be emitted to a fluid flowing in the channel (11).

**11.** A jig (5) for holding the channel chip (1) according to any of claims 1 through 10, comprising:

a base (51) on which the channel chip (1) is intended to be placed, with the substrate (2) facing downward; and
a cover (53) made of a material capable of transmitting light and comprising a flat face intended to be put in contact with the face of the film (3) located on the opposite side of the face bonded to the substrate (2).

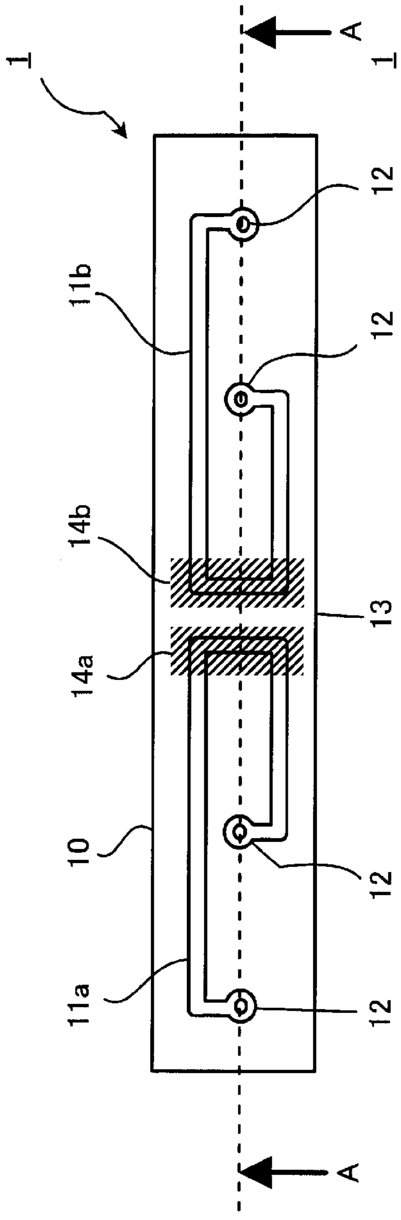


FIG. 1A

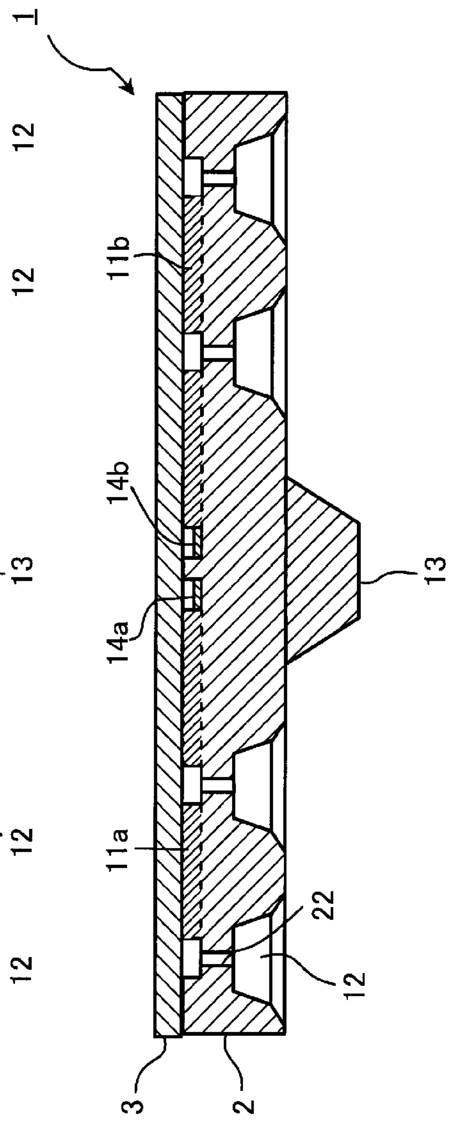


FIG. 1B

FIG. 2A

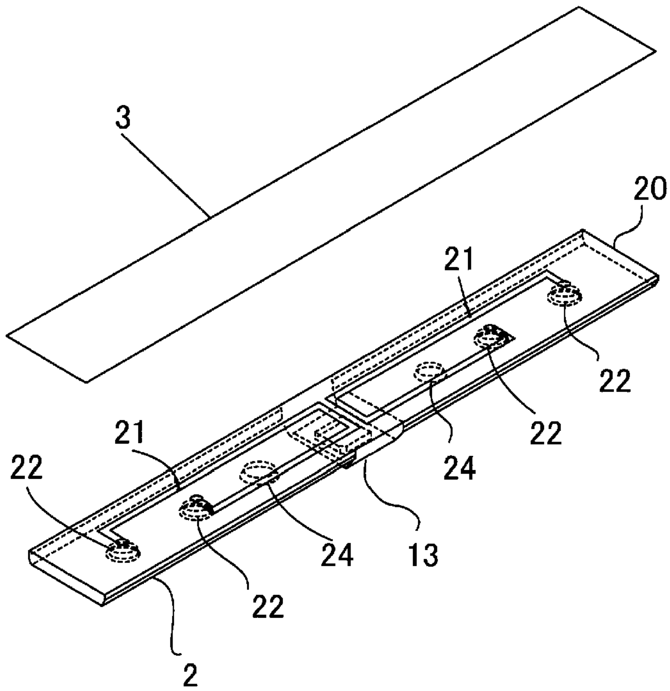


FIG .2B

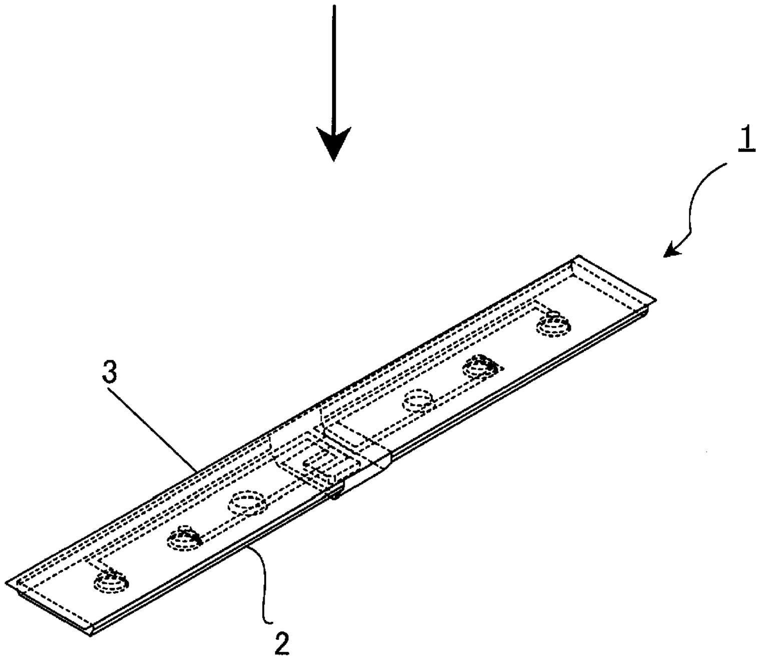

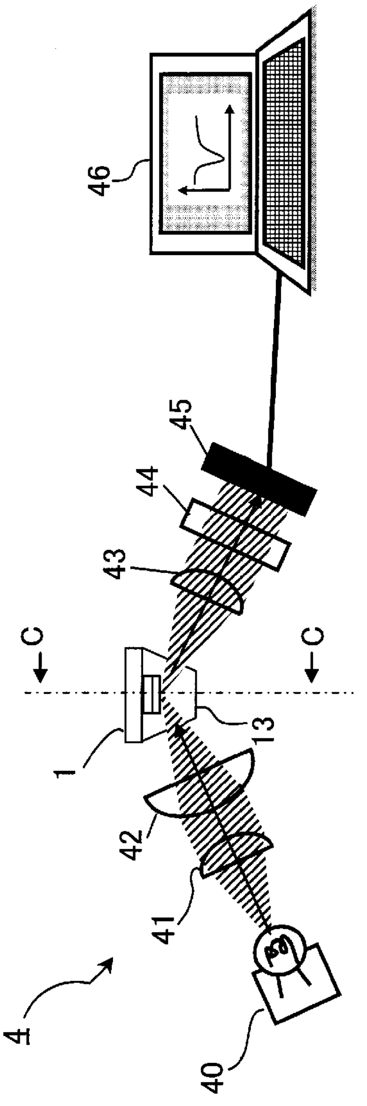


FIG. 3A

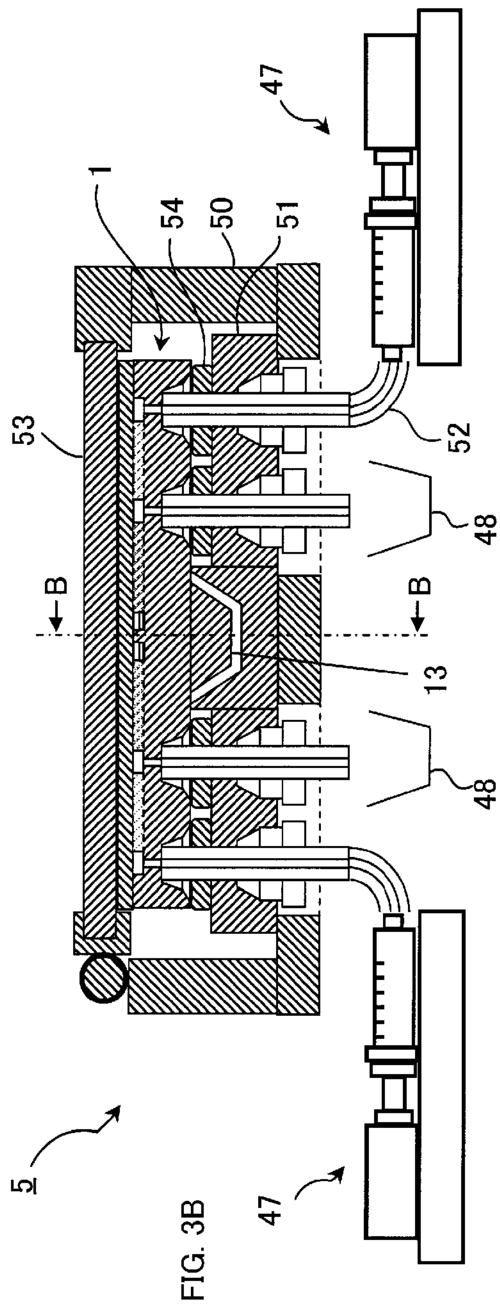


FIG. 3B

FIG. 4

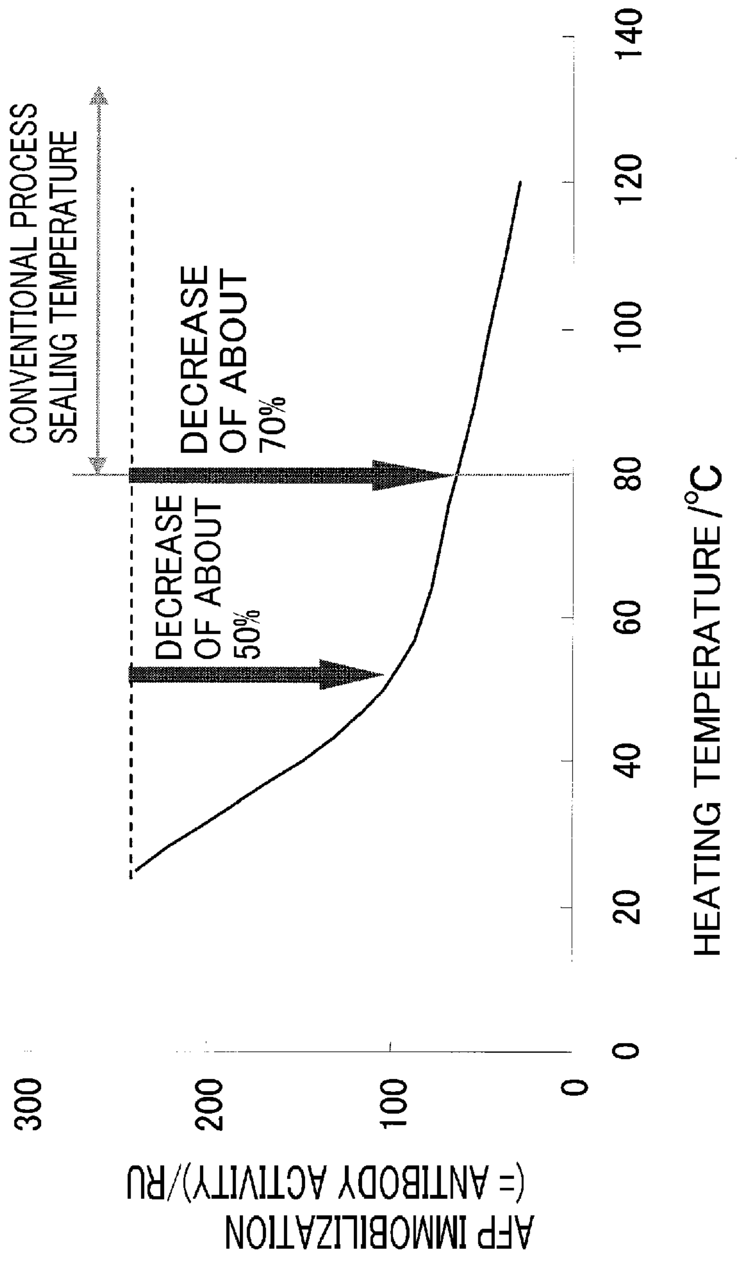
CONVENTIONAL PROCESS
SEALING TEMPERATURE
DECREASE
OF ABOUT
70%
DECREASE
OF ABOUT
50%
AFP IMMOBILIZATION
(= ANTIBODY ACTIVITY)/RU
300
200
100
0
0
20
40
60
80
100
120
140
HEATING TEMPERATURE /°C

FIG. 5

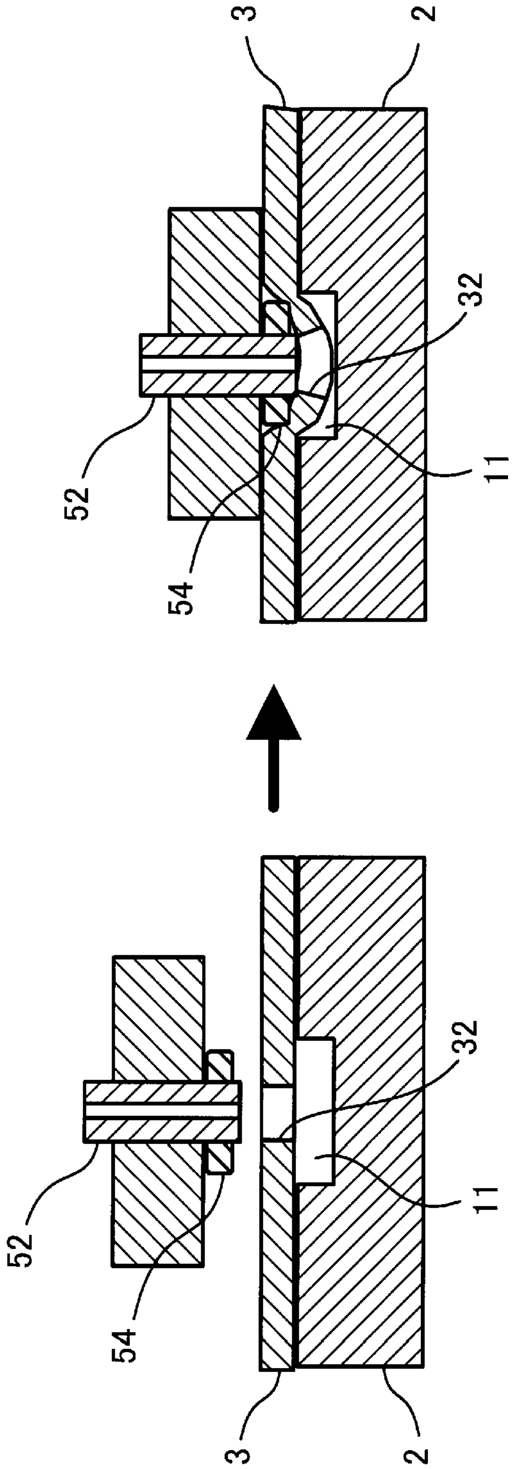

FIG. 6A

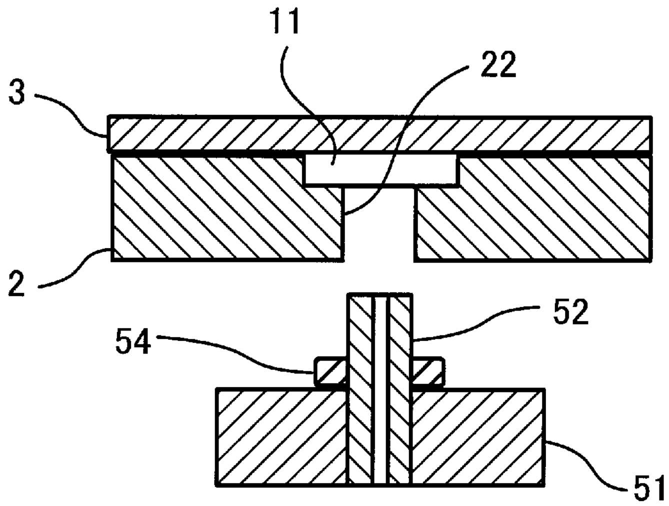


FIG. 6B

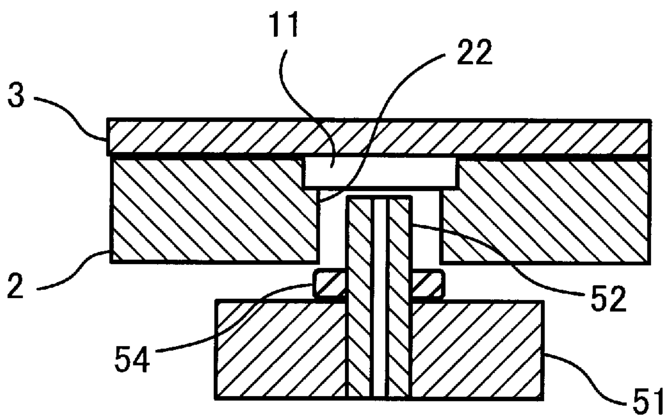

FIG. 7A

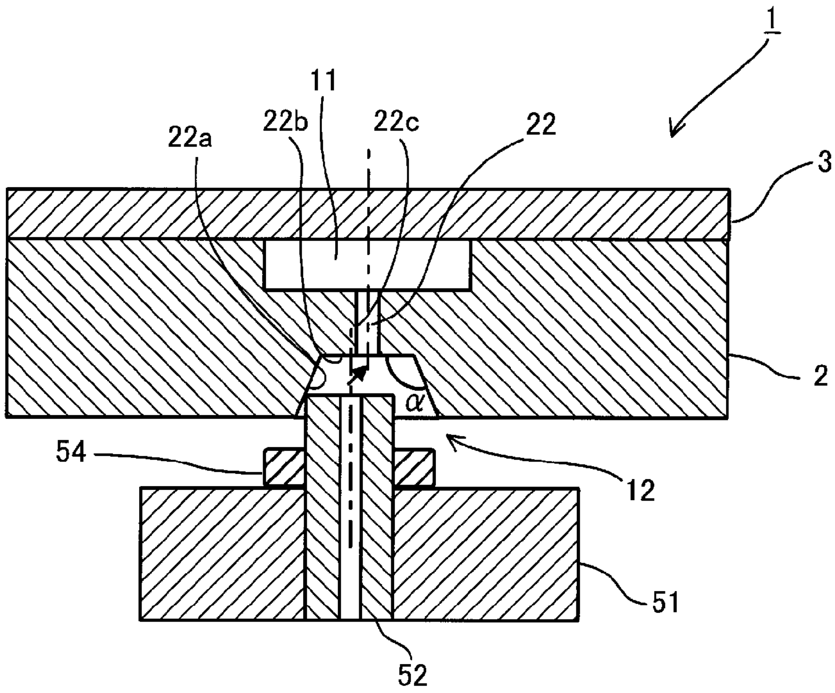


FIG. 7B

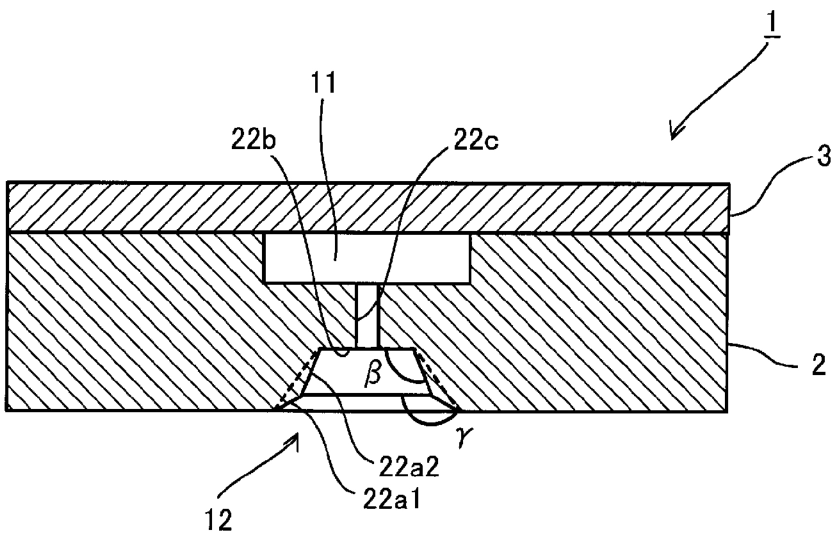

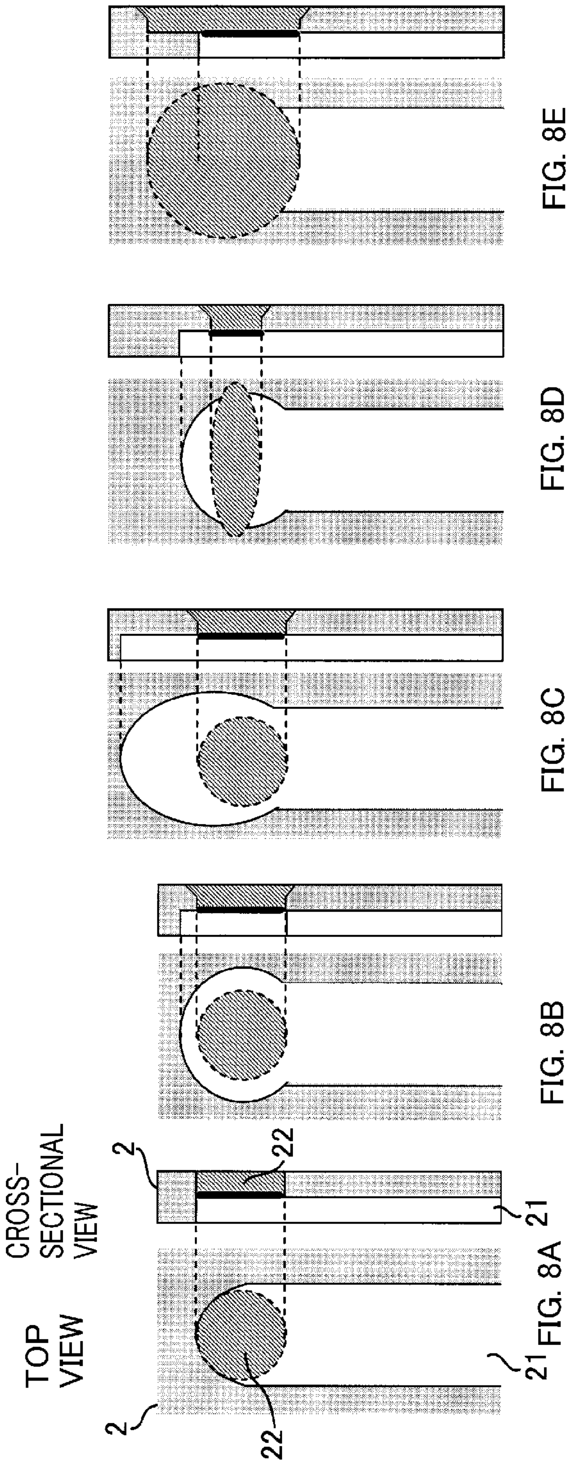


FIG. 8A

FIG. 8B

FIG. 8C

FIG. 8D

FIG. 8E

FIG. 9A

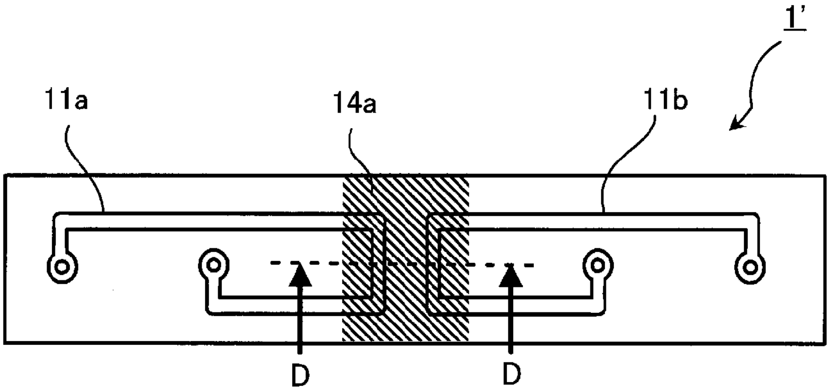


FIG. 9B

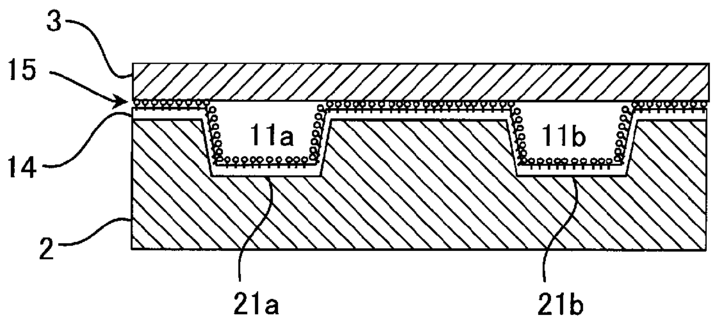

FIG.10A

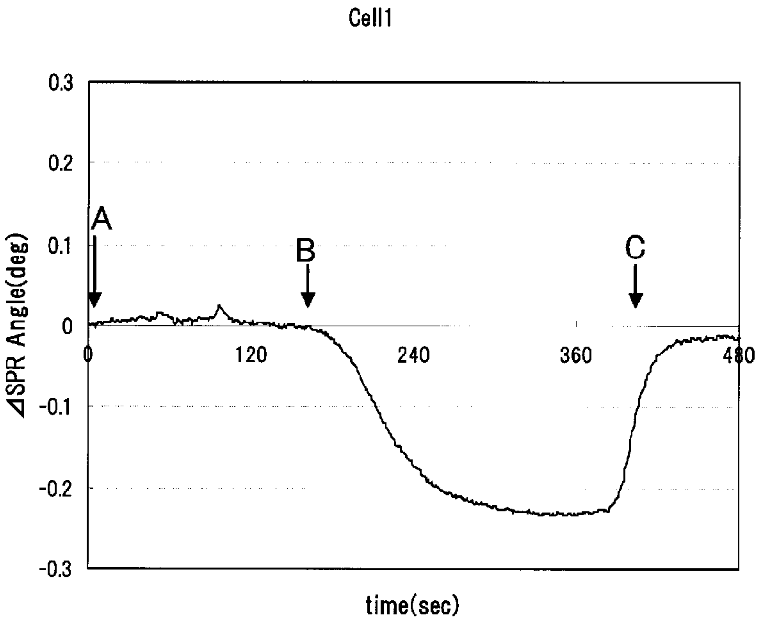


FIG.10B

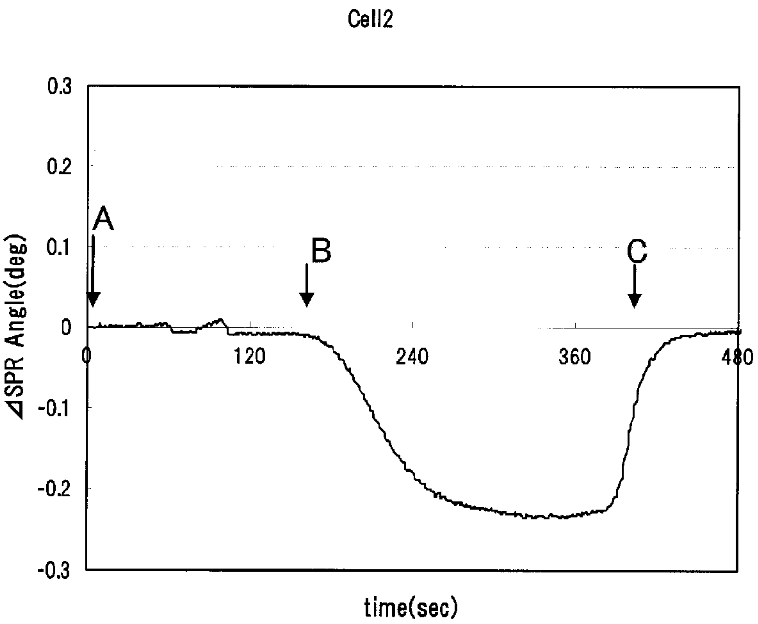

FIG.11A

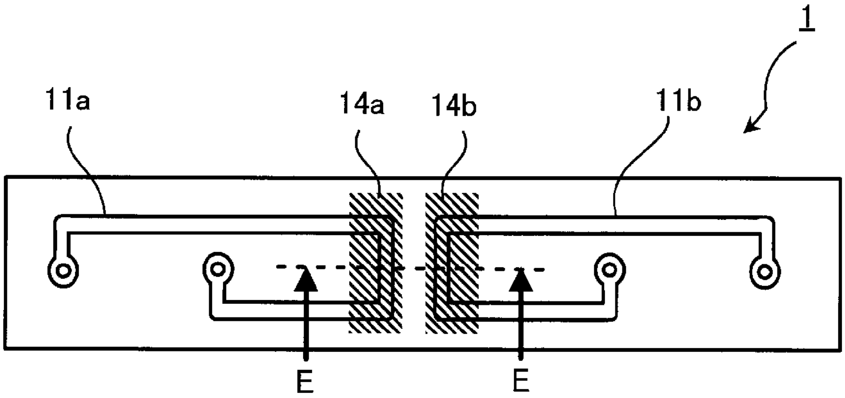


FIG.11B

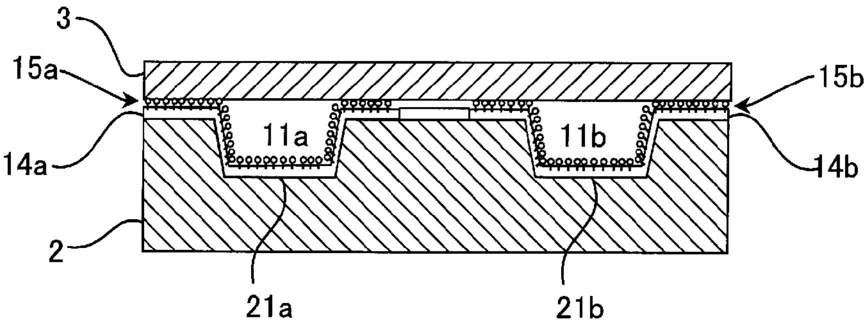

FIG.12A

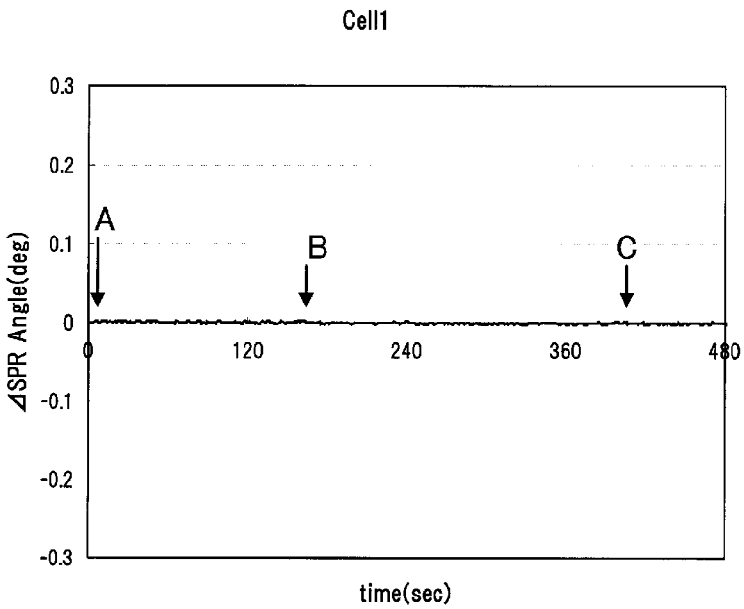


FIG.12B

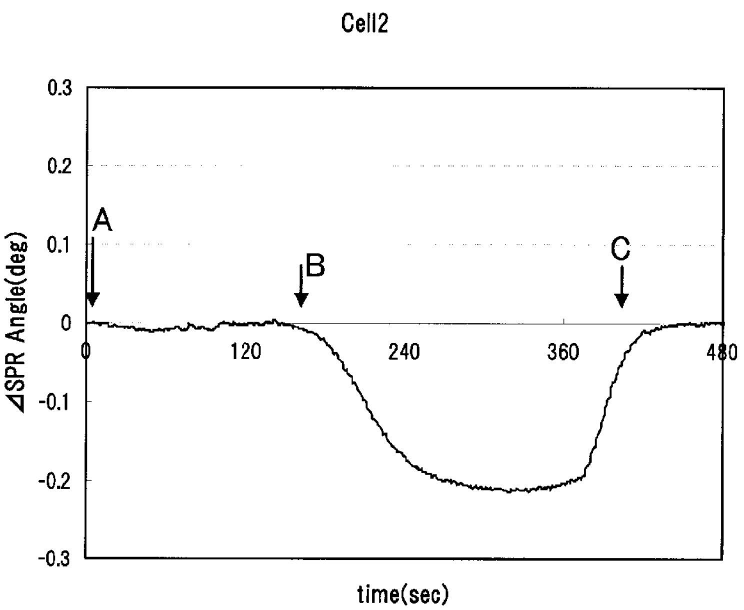

FIG.13

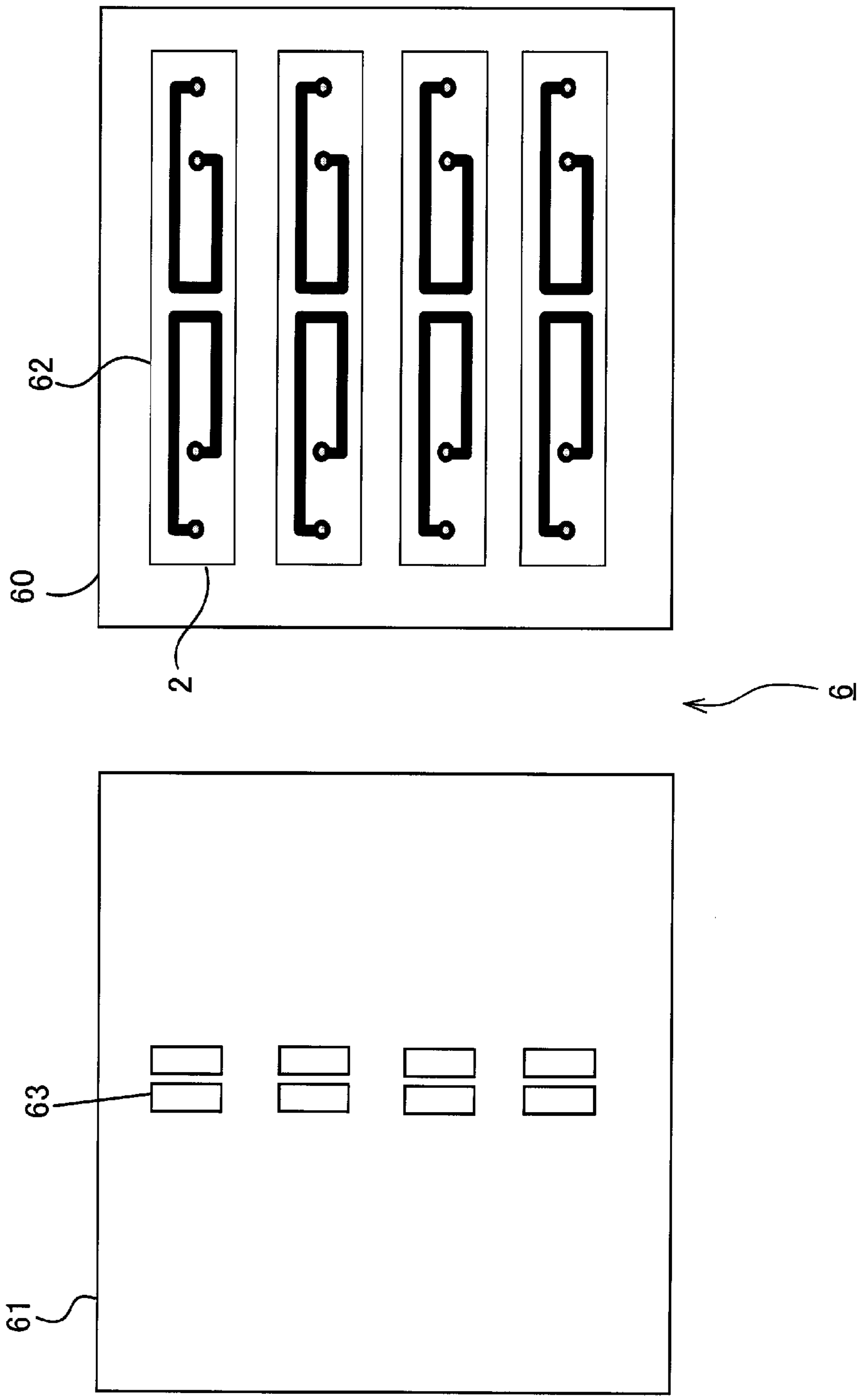

FIG.14A

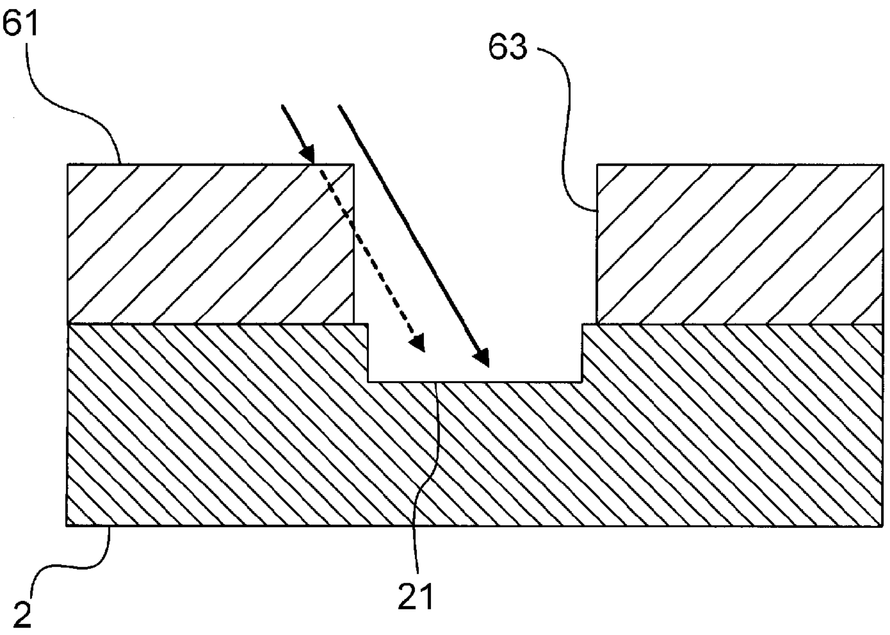


FIG.14B

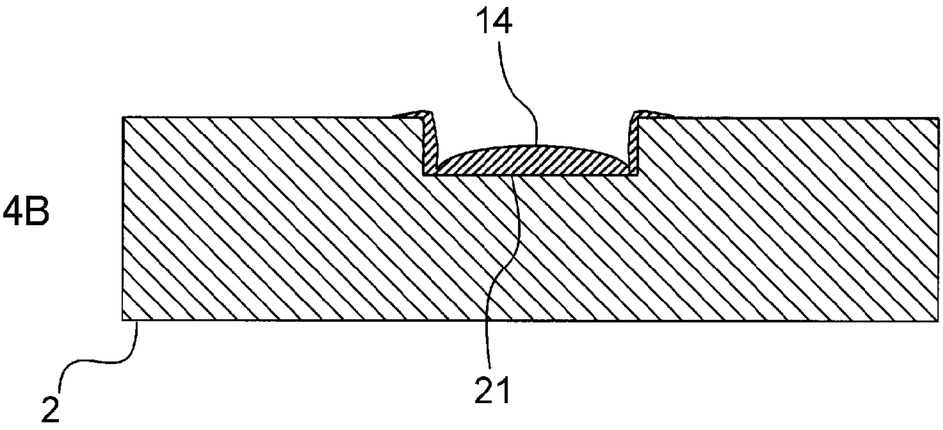

FIG.15

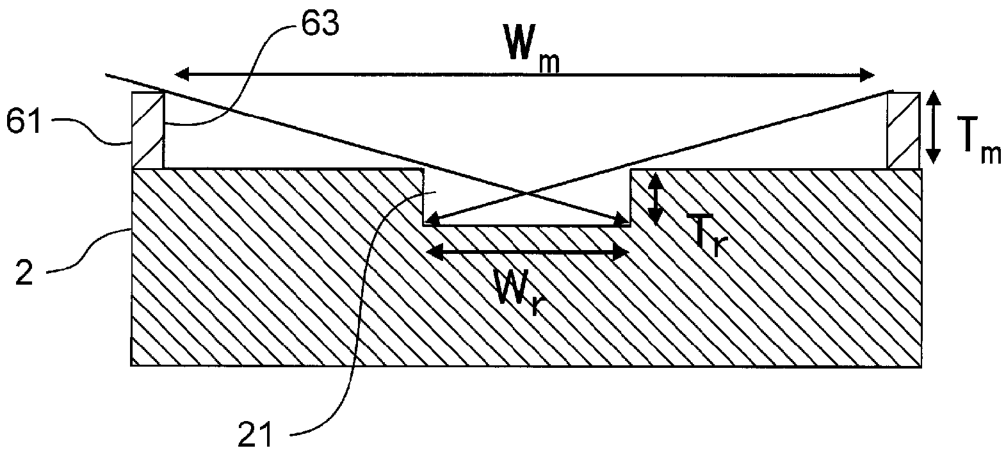

FIG.16A

| | CHANNEL CONDITIONS | | MASK CONDITIONS | | A=(2Tm/Tr+1)·Wr [mm] | Wm/A | FILM THICKNESS REFLECTANCE VARIATION 3σ |
|---|---|---|---|---|---|---|---|
| | WIDTH Wr | DEPTH Tr | OPENING WIDTH Wm | THICKNESS Tm | | | |
| CONDITION 1 | 500um | 50um | 0.7mm | 0.1mm | 2.5 | 0.28 | 5.5 |
| CONDITION 2 | 500um | 50um | 1.1mm | 0.03-0.05mm | 1.1 | 1 | 3.6 |
| CONDITION 3 | 500um | 50um | 5mm | 0.1mm | 2.5 | 2 | 3.5 |

FIG.16B

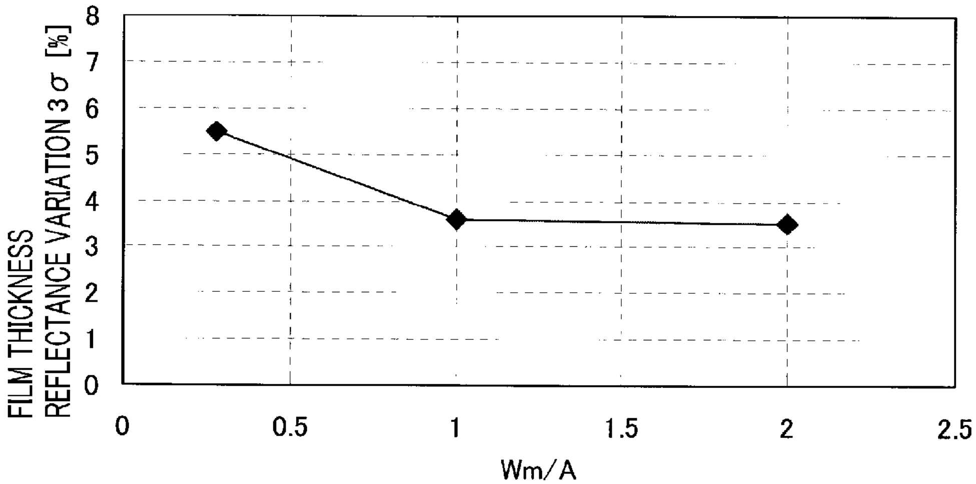

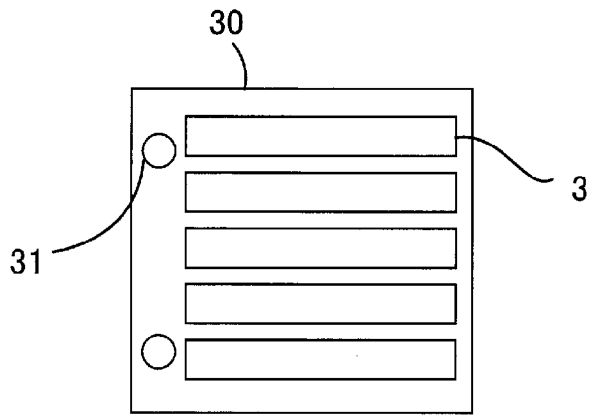


FIG.17A

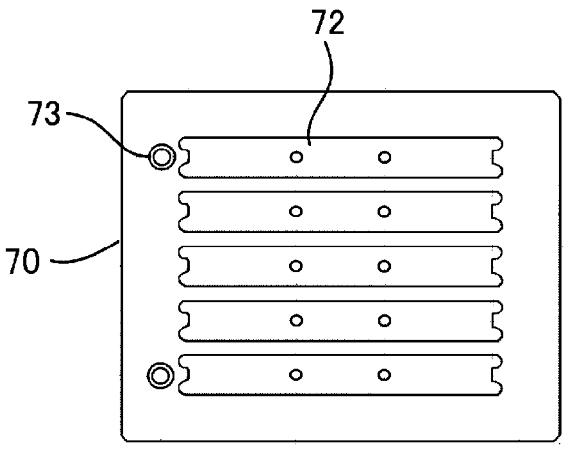


FIG.17B

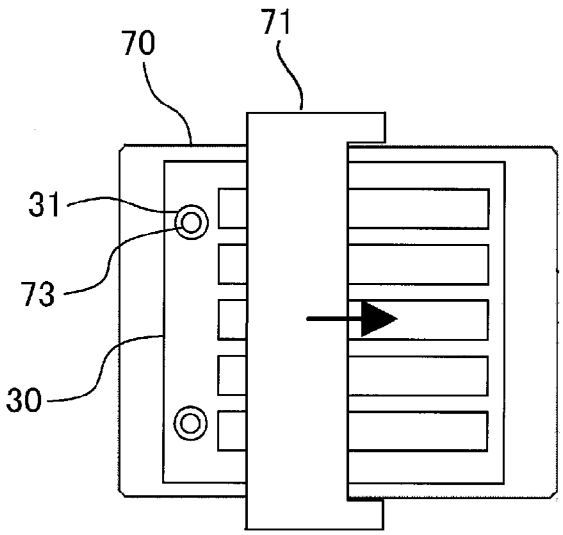


FIG.17C

FIG.18A

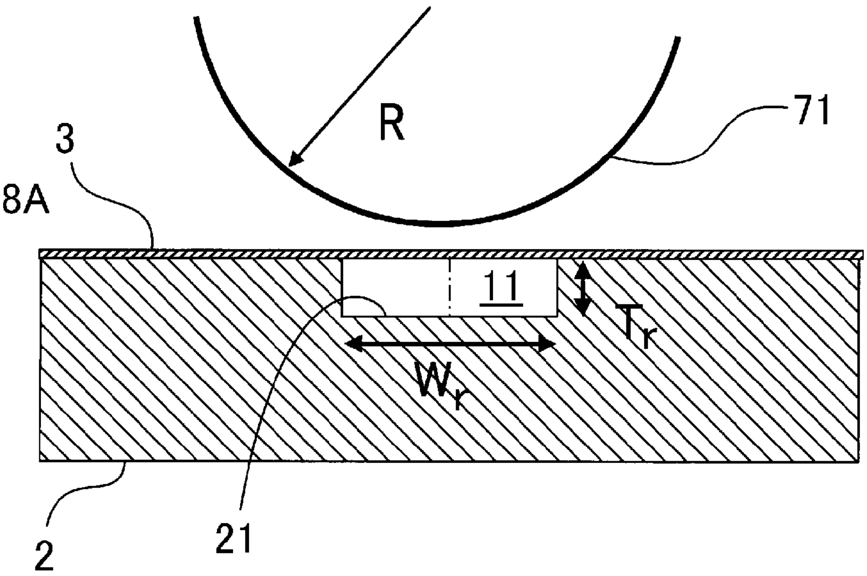


FIG.18B

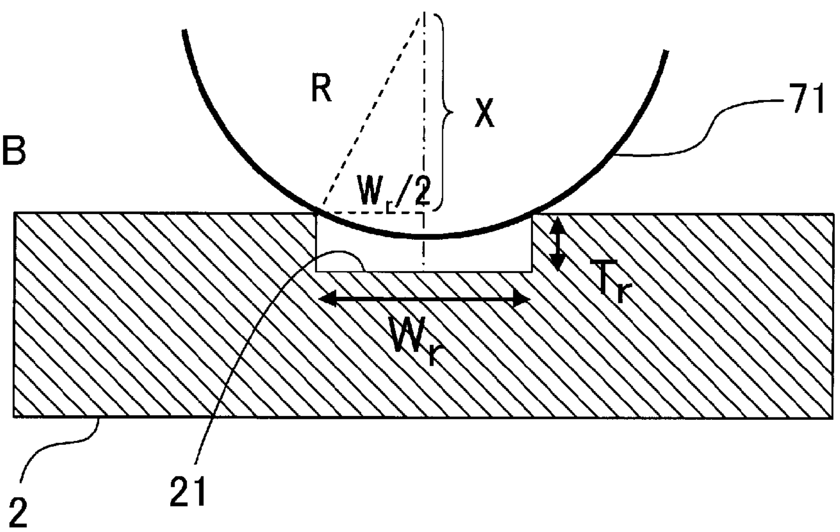

FIG.19A

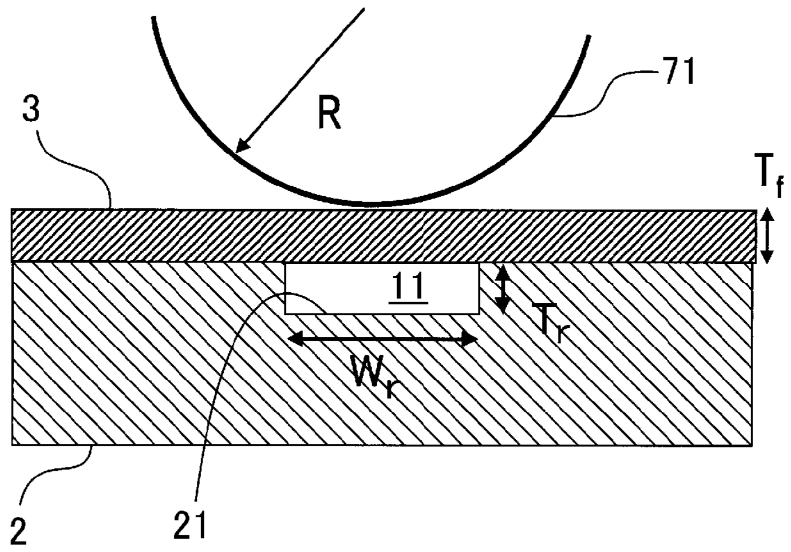


FIG.19B

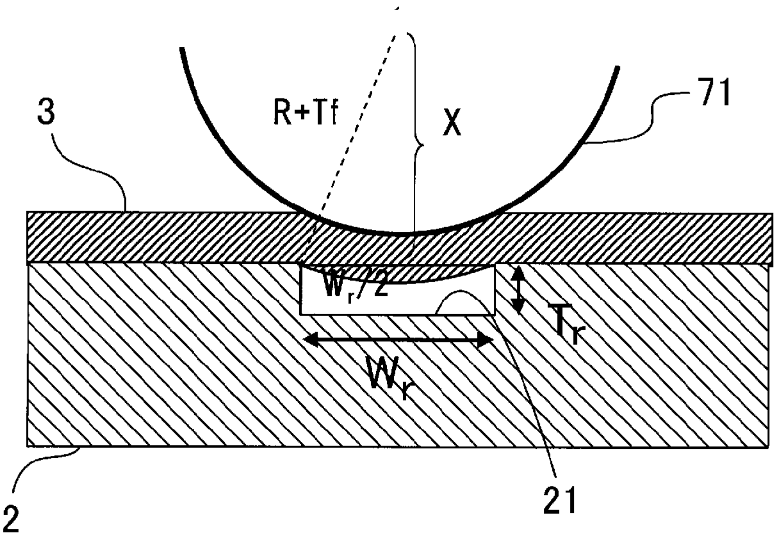

FIG.20

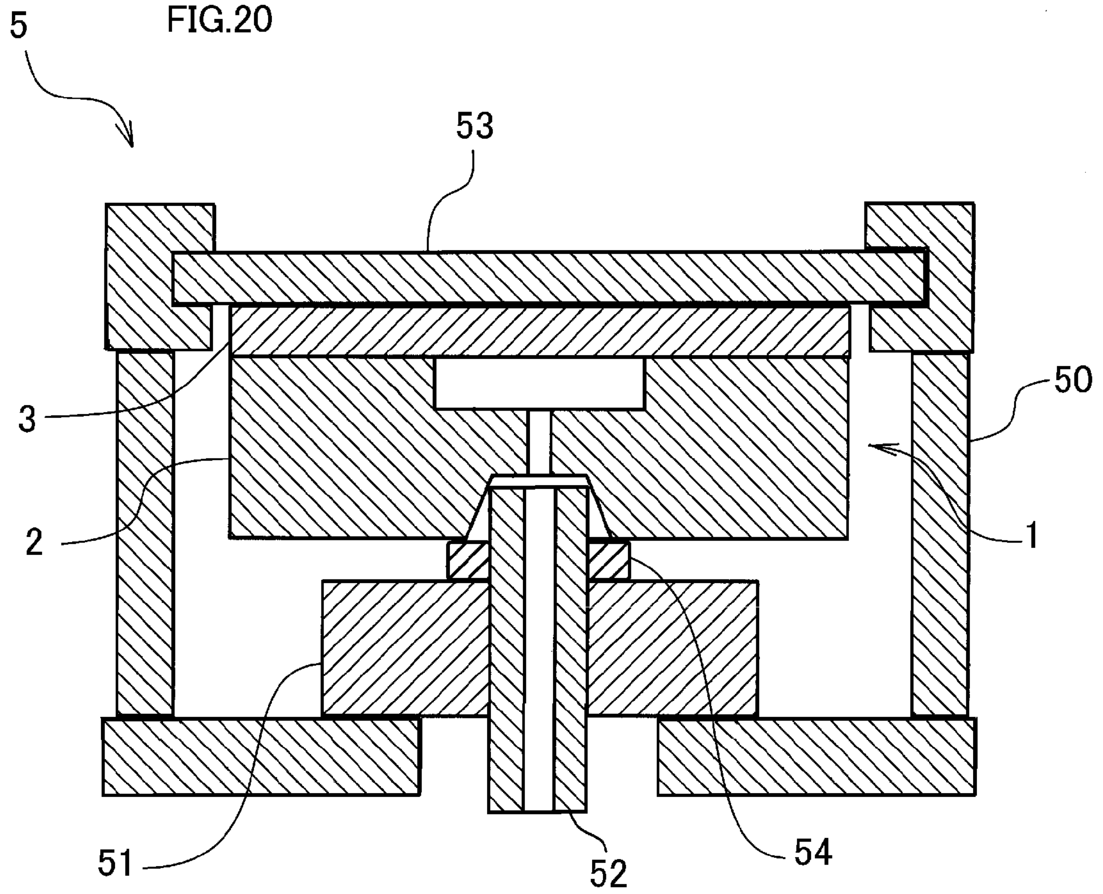

FIG.21A

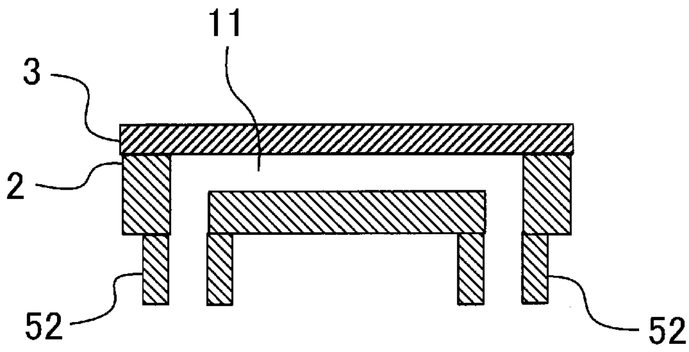


FIG.21B

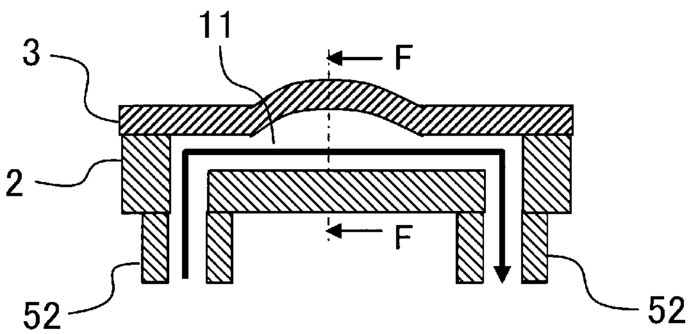


FIG.21C

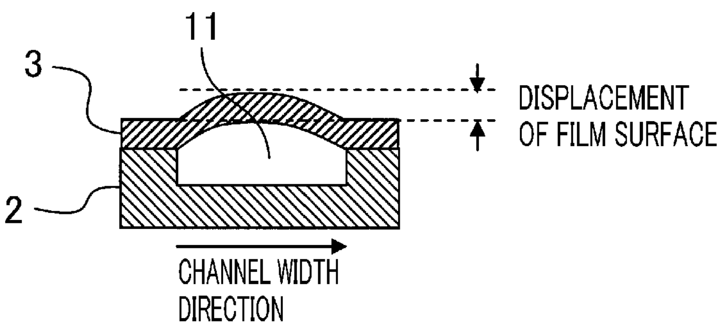

FIG.22

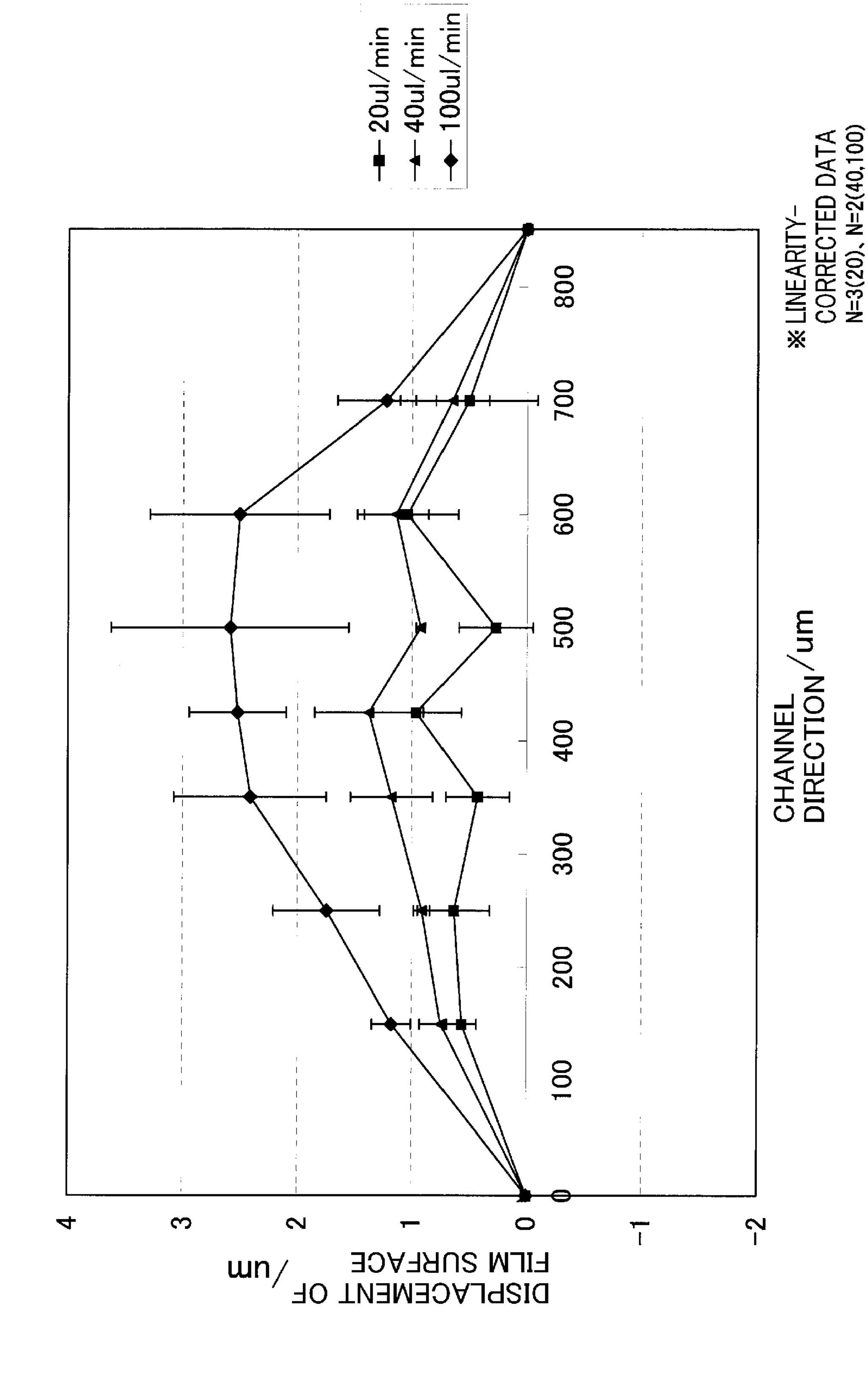
DISPLACEMENT OF FILM SURFACE /um
4
3
2
1
0
−1
−2
0
100
200
300
400
500
600
700
800
CHANNEL DIRECTION /um
20ul/min
40ul/min
100ul/min
※ LINEARITY-CORRECTED DATA
N=3(20), N=2(40,100)

FIG.23A

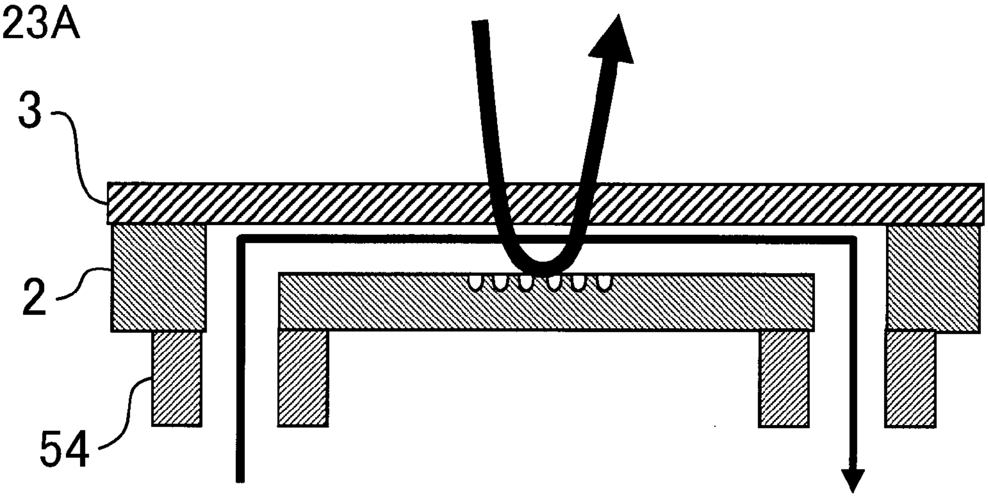


FIG.23B

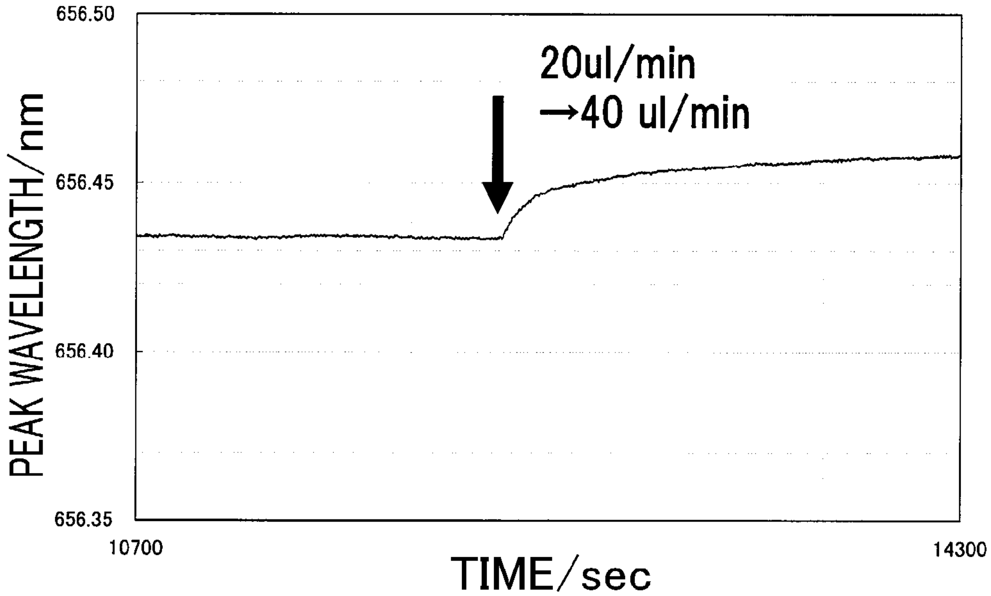

FIG.24A

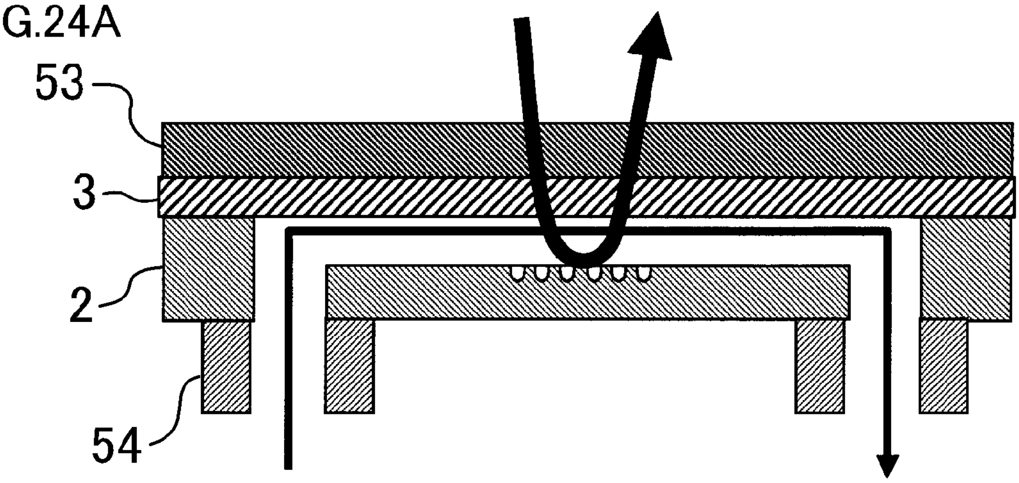


FIG.24B

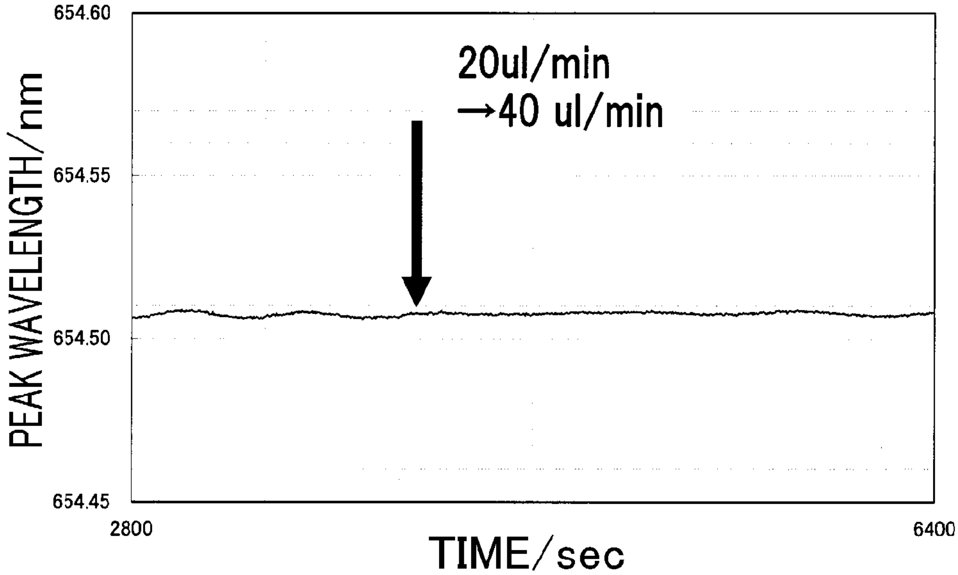

FIG.25

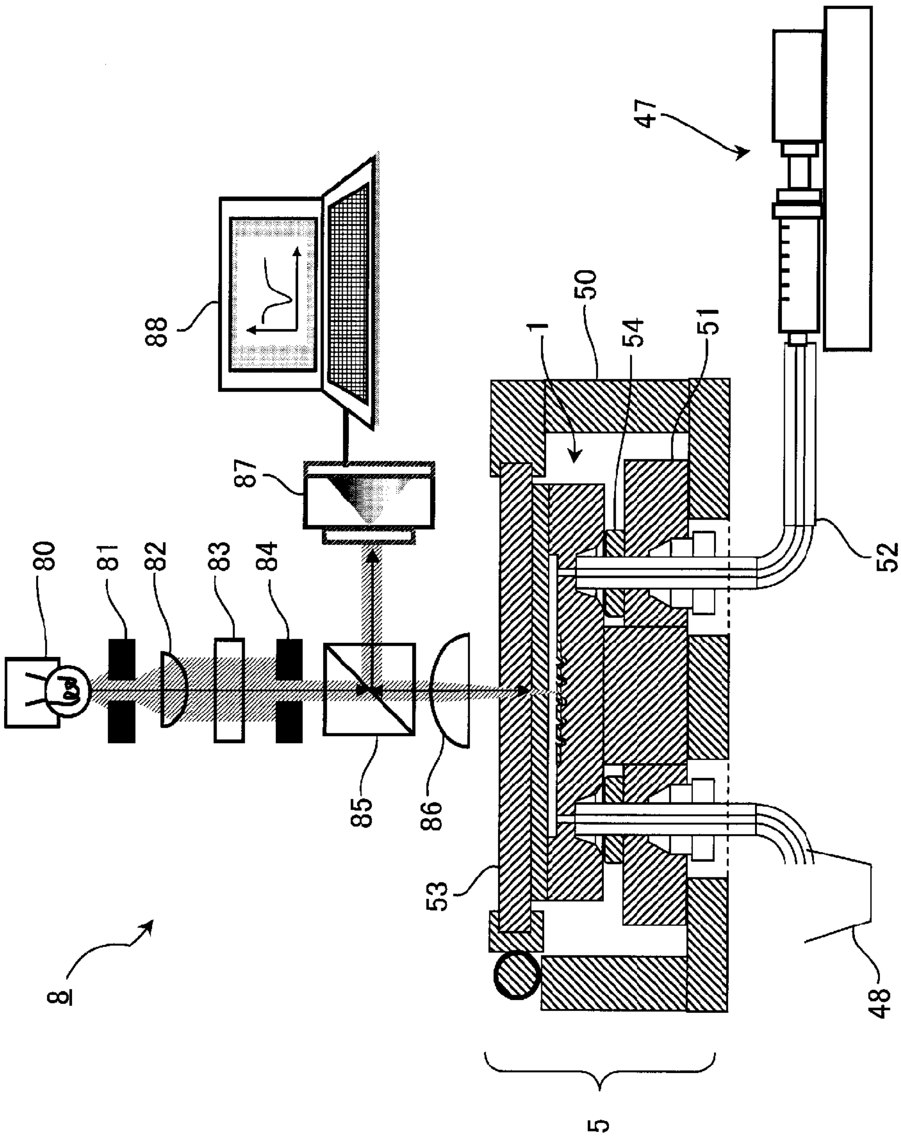

FIG.26

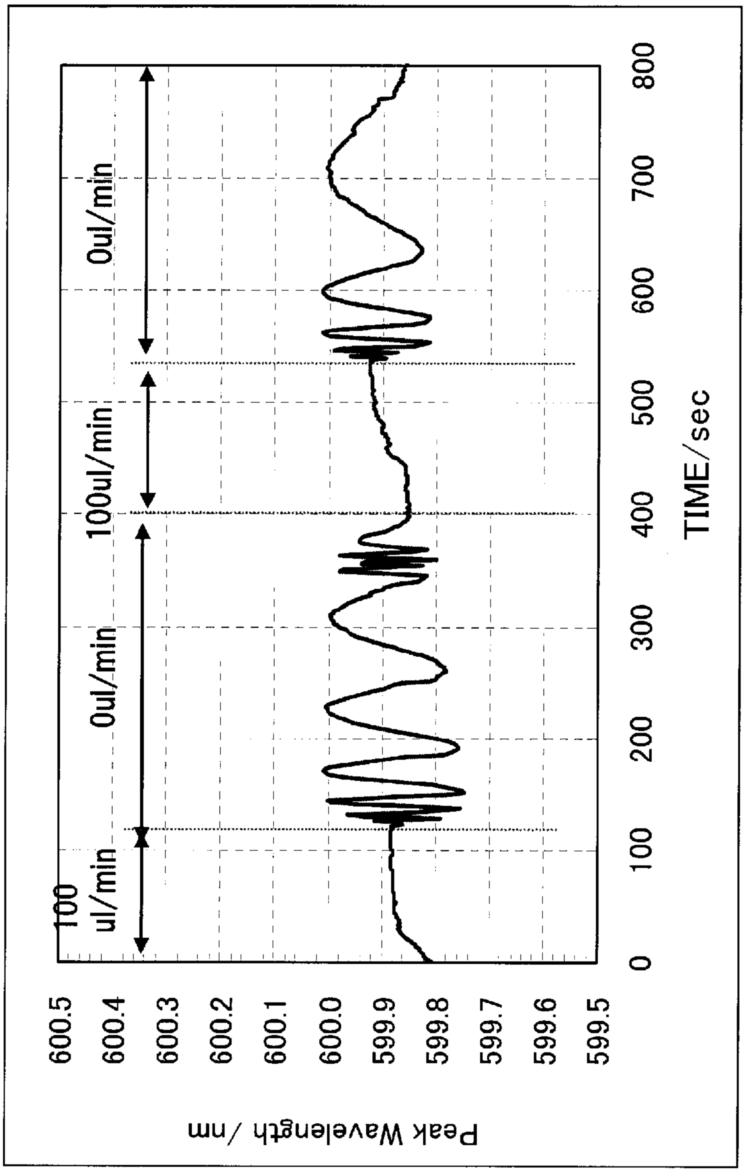
Peak Wavelength /nm
600.5
600.4
600.3
600.2
600.1
600.0
599.9
599.8
599.7
599.6
599.5
0
100
200
300
400
500
600
700
800
TIME/sec
100 ul/min
0ul/min
100ul/min
0ul/min

FIG.27

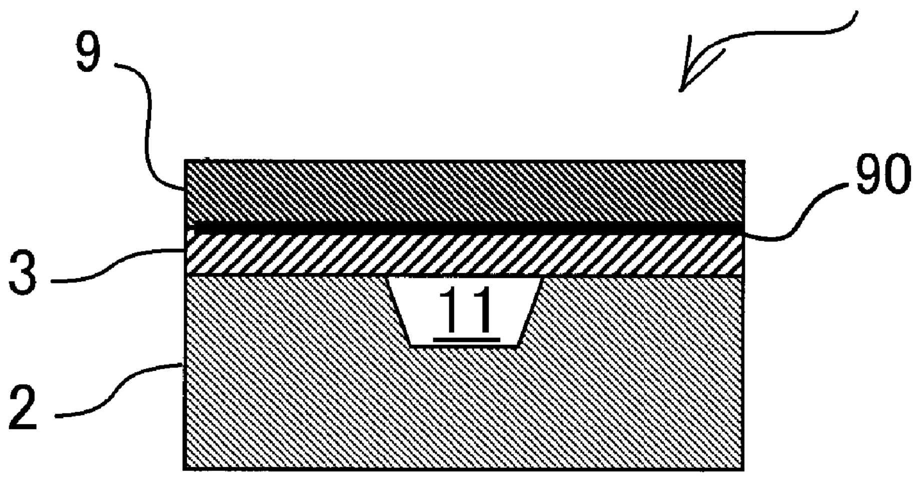

FIG.28

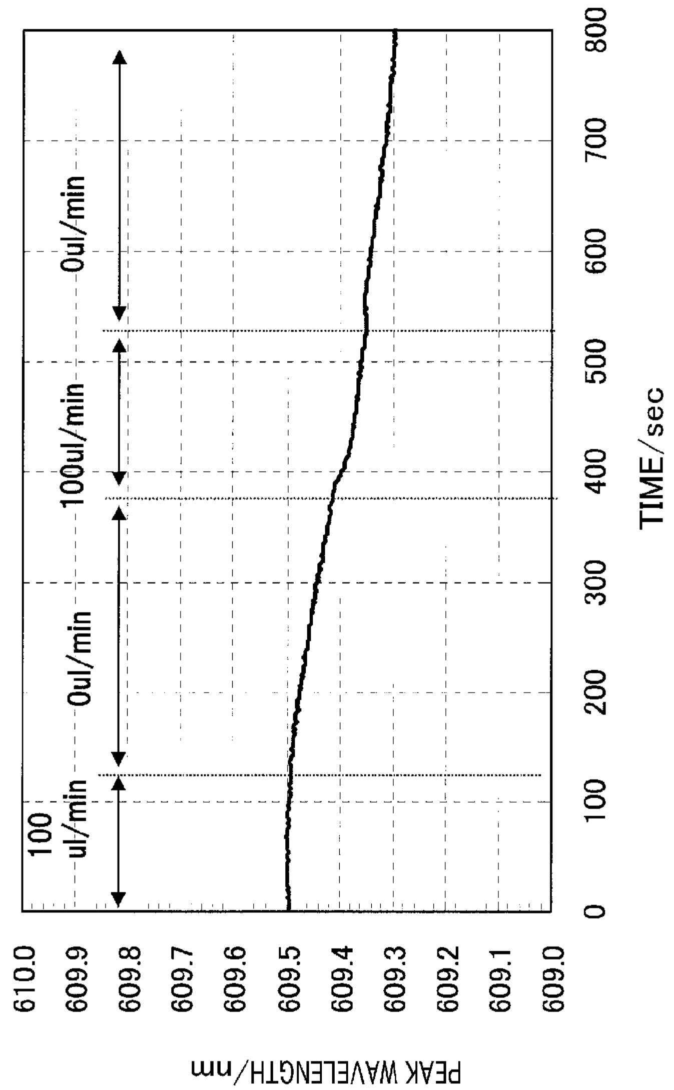
100 ul/min
0ul/min
100ul/min
0ul/min
PEAK WAVELENGTH/nm
610.0
609.9
609.8
609.7
609.6
609.5
609.4
609.3
609.2
609.1
609.0
TIME/sec
0
100
200
300
400
500
600
700
800

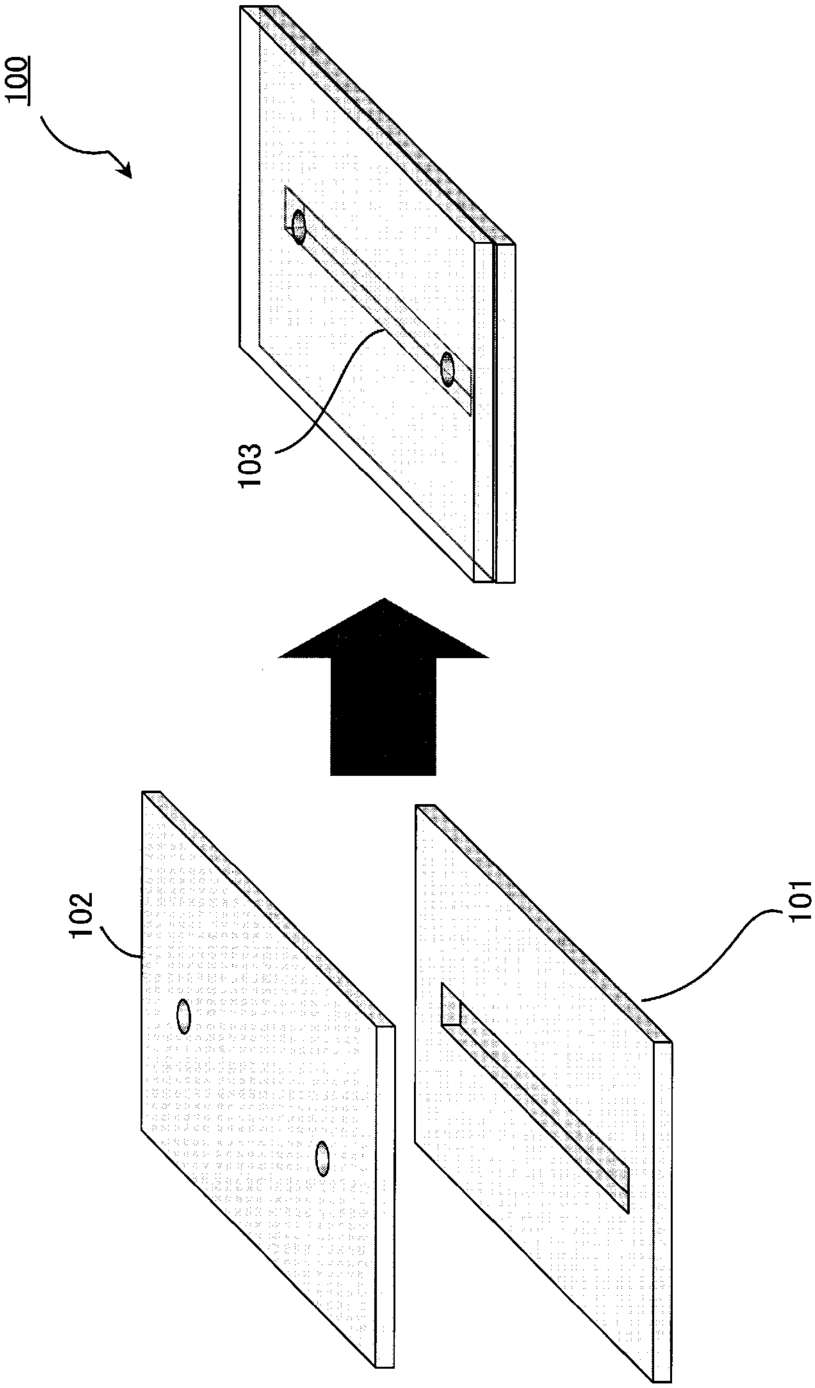


FIG.29

FIG.30

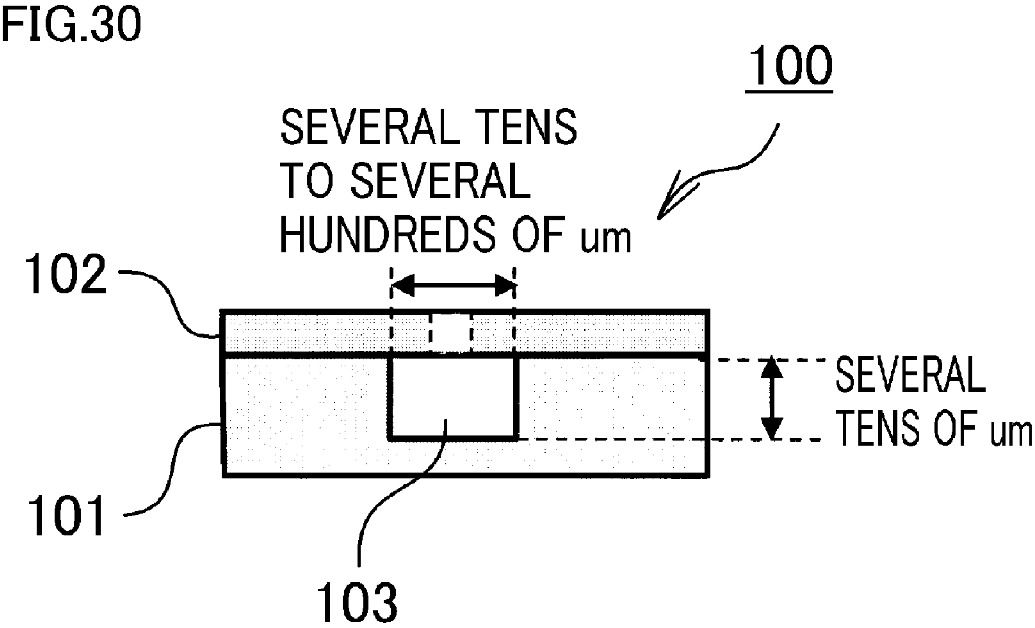
100
SEVERAL TENS
TO SEVERAL
HUNDREDS OF um
102
SEVERAL
TENS OF um
101
103

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008076208 A
- JP 2008175795 A
- JP 2008216121 A
- JP 2007240461 A
- JP 2008216055 A
- JP 2001519455 A